# EUROPEAN PATENT SPECIFICATION

(11) **EP 4 400 861 B1**
(45) Date of publication and mention of the grant of the patent: **12.08.2026**
(21) Application number: 21960128.3
(22) Date of filing: 11.10.2021
(51) Int. Cl.: G01S 7/481, G01S 17/42, G01S 17/931

(54) **SCANNING SYSTEM**
ABTASTSYSTEM
SYSTÈME DE BALAYAGE

(43) Date of publication of application: 17.07.2024
(73) Proprietor: Yinwang Intelligent Technologies Co., Ltd., Shenzhen, Guangdong 518110 (CN)
(72) Inventor: QIU, Sunjie, Shenzhen, Guangdong 518129 (CN); AN, Kai, Shenzhen, Guangdong 518129 (CN); GUO, Jiaxing, Shenzhen, Guangdong 518129 (CN); HAN, Wei, Shenzhen, Guangdong 518129 (CN); ZHANG, Haoliang, Shenzhen, Guangdong 518129 (CN)
(74) Representative: MERH-IP Matias Erny Reichl Hoffmann Patentanwälte PartG mbB
(86) International application number: PCT/CN2021/122995
(87) International publication number: WO 2023/060374

(56) References cited:
- EP-A1- 3 242 145
- EP-A1- 3 739 357
- CN-A- 108 873 125
- CN-A- 110 333 511
- CN-A- 111 580 114
- CN-A- 113 075 680
- JP-A- 2020 063 970
- US-A1- 2015 177 366
- US-A1- 2017 350 966
- US-A1- 2020 355 800

## Description

### TECHNICAL FIELD

The invention relates to the field of optical technologies, and in particular, to a scanning system.

### BACKGROUND

Generally, stray light affects normal detection light. A LiDAR (light detection and ranging, LiDAR) is used as an example. The LiDAR generally includes a light source, an emitting optical system, a scanner, a detector, a receiving optical system, and the like. The emitting optical system is mainly configured to shape a laser beam emitted by the light source into detection light required by the LiDAR, and the scanner reflects the detection light to a detection area. A target in the detection area reflects the detection light back to the scanner. Then, the scanner reflects the detection light to the receiving optical system (reflected light obtained by reflecting the detection light by the target is referred to as an echo signal). The receiving optical system collects the echo signal reflected from the target, and propagates the echo signal to the detector, to detect the detection area. However, stray light may be generated in the LiDAR in a process in which the detection light is propagated from the light source to the detection area. The stray light may be received by the detector, thereby affecting detection accuracy of the LiDAR. In particular, when the LiDAR detects a target at a short distance, the stray light may cause great interference to an echo signal received by the detector, thereby reducing detection accuracy of the LiDAR.

Document US 2020/355800 A1 discloses a partition plate including a material that blocks transmission of light and partitions an internal space of an enclosure into a light-projecting space where a light projector is disposed and a light-receiving space where a light receiver is disposed. A light shielding plate is configured by a material that blocks transmission of light, is provided between a light-projecting deflector, which is a portion of a deflecting mirror used for light projection, and a light-receiving deflector, which is a portion of the deflecting mirror used for light reception, and integrally rotates with the deflecting mirror. Further, the light shielding plate and a partitioning portion may be disposed within the same plane while facing each other at respective distal end portions provided with opposite walls and defining an overlap portion therebetween.

Document EP 3 739 357 A1 discloses a lidar device for measuring distance using a laser. The lidar device comprises: a laser output unit for outputting a laser; a first scanning unit which expands an irradiation area into a line form by acquiring the laser outputted from the laser output unit; a second scanning unit which expands the irradiation area into a plane form by acquiring the laser irradiated from the first scanning unit; and a sensor unit which detects the laser reflected from an object, wherein the first scanning unit may comprise a nodding mirror which nods in a pre-set angle range and expands the irradiation area of the laser to a line form, and the second scanning unit may comprise a rotating polygon mirror which expands the irradiation area of the laser to a plane form by rotating with respect to a single axis. The polygon mirror may have a light shielder to separate the polygon mirror into a light irradiation portion and a light reception portion to prevent laser light from being reflected from the irradiation portion and from being erroneously detected by the sensor unit.

Document US 2017/350966 A1 discloses optical separating means comprising a substantially rigid separating wall for separating a receiving mirror region of a deflection mirror from a transmitting mirror region, wherein the separating wall has a rectilinear edge section. The separating means has fastening webs, which are arranged on both sides of the rectilinear edge section of the separating wall, for fastening to a mirror support.

In order to enable fault-free assembly of a deflection mirror arrangement for a laser scanner, an elastically deformable seal element is arranged along the rectilinear edge section of the separating wall.

Document EP 3 242 145 A1 discloses a laser scanner which includes a light source which emits a light beam and a scanning mirror rotatable about an axis which reflects the light beam through a tilted protective window toward a scanning area and which directs return light from objects toward receiving optics. The laser scanner may include a collecting mirror which receives the return light, and an interference filter disposed between the collecting mirror and the scanning mirror. The window may include an anti-reflective coating which reduces reflection of internally scattered light. The tilted window may direct the reflective component of internally scattered light into a zone where an energy light absorber is present. A bulkhead system which may include a separation baffle may be provided to prevent light incident on the interference filter at an angle which is below an acceptance angle of the interference filter.

Document US 2015/177366 A1 discloses an optoelectronic device having a first component provided to generate radiation, a second component provided to receive radiation, a connection board and a frame. The first component and the second component are arranged on the connection board. The frame is arranged on the connection board. The first component is arranged in a first opening in the frame. The second component is arranged in a second opening in the frame. The first opening and the second opening extend from a main face of the frame opposite the connection board in the direction of the connection board. The main face between the first opening and the second opening has an intermediate region, in which a reflection of radiation incident on the main face is reduced.

### SUMMARY

The present invention provides a scanning system to suppress or eliminate stray light.

The present invention is defined by the independent claim. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention.

For technical effects that can be achieved in any one of the third aspect and the fifth aspect, refer to descriptions of beneficial effects in the first aspect. Details are not described herein again. For technical effects that can be achieved in any one of the fourth aspect and the sixth aspect, refer to descriptions of beneficial effects in the first aspect. Details are not described herein again.

Furthermore, it is noted that expressions such as "in this application" should be understood to mean "in this specification".

### BRIEF DESCRIPTION OF DRAWINGS

FIG. 1a is a schematic diagram of a possible application scenario according to this application;
FIG. 1b is a schematic diagram of a location of a LiDAR on a vehicle according to this application;
FIG. 2 is a diagram of an optical path for generating stray light according to this application;
FIG. 3 is a schematic diagram of a structure for eliminating stray light according to this application;
FIG. 4 is a schematic diagram of an architecture of a scanning system according to this application;
FIG. 5a is a schematic diagram of a structure of a light isolation component according to this application;
FIG. 5b is a diagram of a propagation optical path of first stray light according to this application;
FIG. 5c is a schematic diagram of a structure of another light isolation component according to this application;
FIG. 5d is a schematic diagram of a structure of still another light isolation component according to this application;
FIG. 5e is a schematic diagram of a structure of still another light isolation component according to this application;
FIG. 5f is a schematic diagram in which a soft material is filled between a light isolation component and a scanner according to this application;
FIG. 6a is a schematic diagram of a structure of another light isolation component according to this application;
FIG. 6b is a diagram of a propagation optical path of second stray light according to this application;
FIG. 6c is a schematic diagram of a structure of still another light isolation component according to this application;
FIG. 7a is a schematic diagram of a structure of still another light isolation component according to this application;
FIG. 7b is a diagram of a propagation optical path of first stray light and a propagation optical path of second stray light according to this application;
FIG. 8a is a schematic diagram of projections of a scanner and a light isolation component according to this application;
FIG. 8b is another schematic diagram of projections of a scanner and a light isolation component according to this application;
FIG. 9a is a schematic diagram of a structure of a semi-open component according to this application;
FIG. 9b is a schematic diagram of an architecture of a scanning system including a semi-open component according to this application;
FIG. 9c is a schematic diagram of an architecture of another scanning system including a semi-open component according to this application;
FIG. 9d is a schematic diagram of a structure of another semi-open component according to this application;
FIG. 10a is a schematic diagram of a structure of a quasi-grating according to this application;
FIG. 10b is a schematic diagram of an architecture of a scanning system including a quasi-grating according to this application;
FIG. 11a is a schematic diagram of a structure of a punctured mechanical part according to this application;
FIG. 11b is a schematic diagram of an architecture of a scanning system including a punctured mechanical part according to this application;
FIG. 12 is a schematic diagram of an architecture of another scanning system according to this application;
FIG. 13 is a schematic diagram of an architecture of a detection system according to this application;
FIG. 14a is a schematic diagram of a structure of a light source component according to this application;
FIG. 14b is a schematic diagram of a structure of an emitting optical system according to this application;
FIG. 15 is a schematic diagram of a structure of a receiving optical system according to this application;
FIG. 16 is a schematic diagram of a structure of a pixel array according to this application;
FIG. 17 is a schematic diagram of a location relationship between a LiDAR and a vehicle according to this application; and
FIG. 18 is a schematic diagram of a structure of a terminal device according to this application.

### DESCRIPTION OF EMBODIMENTS

The following describes in detail embodiments of this application with reference to accompanying drawings.

The following describes some terms in this application. It should be noted that these explanations are intended for ease of understanding by a person skilled in the art, but do not constitute a limitation on the protection scope claimed in this application.

### 1. Flanging

Flanging means that a straight wall or flange with a specific angle is formed along a closed or unclosed curve edge on a plane part or a curved surface part by using a function of a mold. In this application, the flanging means that a side wall or a flange with a specific angle is formed along an edge of a bottom plate on a plane part (namely, the bottom plate) of a light isolation component by using a function of a mold.

### 2. Pits

The pits refer to a disadvantage that affects surface quality of a product, and are represented as a rough surface of the product. The rough surface is also referred to as a pit surface. Most of the pits are continuous, or some of the pits are distributed in local dots or distributed periodically.

### 3. Scattering and reflection

The reflection of light refers to a phenomenon that the light changes a propagation direction on an interface and returns to an original substance when being propagated to a different substance. Reflection in this application refers to specular reflection, that is, light from a single incoming direction is reflected to a single outgoing direction.

The scattering of light means that when the light is irradiated to a rough or granular surface, the light is reflected in all directions due to a micro irregular shape of an interface.

Based on the foregoing content, the following shows examples of some possible application scenarios of this application.

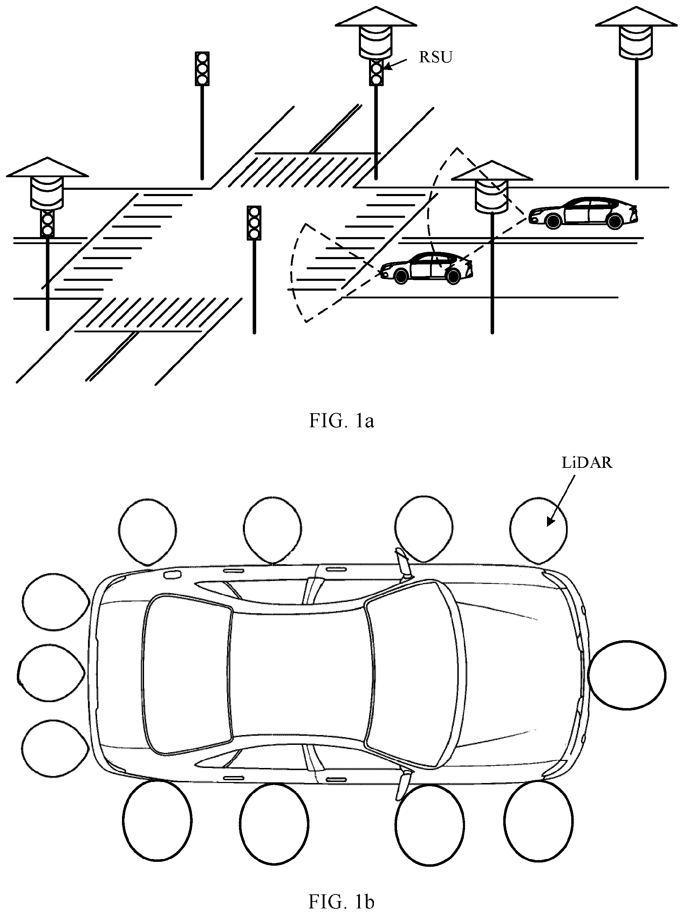

FIG. 1a shows an example of a schematic diagram of a possible application scenario according to this application. In this application scenario, an example in which a LiDAR is installed on a vehicle is used. The vehicle may be, for example, an unmanned vehicle, an intelligent vehicle, an electric vehicle, or a digital vehicle. The LiDAR may be deployed at various locations of the vehicle (refer to FIG. 1b). The LiDAR may be deployed in any one or more of the four directions: the front, the rear, the left, and the right of the vehicle, to capture surrounding environment information of the vehicle. In FIG. 1a, an example in which the LiDAR is deployed in the front of the vehicle is used. The LiDAR may sense a sector area shown in a dashed-line box shown in FIG. 1a, and the sector area may be referred to as a detection area of the LiDAR (or referred to as a field of view of the LiDAR).

In a possible implementation, the LiDAR may obtain, in real time or periodically, longitude and latitude, a speed, or an orientation of an ego vehicle, or association information (for example, a distance of a target, a moving speed of the target, a posture of the target, or a grayscale image of the target) about the target (for example, another surrounding vehicle) within a specific range. The LiDAR or the vehicle may determine a location and/or path planning of the vehicle, or the like based on the association information. For example, the location of the vehicle is determined through the longitude and the latitude. Alternatively, a driving direction and a destination of the vehicle in a future period of time are determined through the speed and the orientation. Alternatively, a quantity of obstacles, density of the obstacles, and the like are determined through the distance to a surrounding object, where the obstacles are around the vehicle. Further, optionally, assisted driving, autonomous driving, or the like of the vehicle may be implemented with reference to a function of an advanced driving assistant system (advanced driving assistant system, ADAS). It should be understood that a principle of detecting the association information of the target by the LiDAR is as follows. The LiDAR emits detection light in a specific direction. When there is a target in a detection area of the LiDAR, the target may reflect the received detection light back to the LiDAR (the reflected detection light may be referred to as an echo signal). Then, the LiDAR determines the association information of the target based on the echo signal.

It should be noted that the foregoing application scenario is merely an example. The LiDAR (the LiDAR includes a receiving optical system provided in this application) provided in this application may be further applied to a plurality of other possible scenarios, and is not limited to the foregoing example scenario. For example, the LiDAR may alternatively be installed on an unmanned aerial vehicle as an airborne radar. For another example, the LiDAR may alternatively be installed on a road side unit (road side unit, RSU) as a road side traffic LiDAR, to implement intelligent vehicle-to-infrastructure cooperative communication. For another example, the LiDAR may be installed on an automated guided vehicle (automated guided vehicle, AGV). The AGV refers to a transportation vehicle that is equipped with an automatic navigation apparatus like an electromagnetic or optical apparatus, can drive along a specified navigation path, and has security protection and various moving functions. Details are not listed one by one herein again. It should be understood that, the application scenarios described in this application are intended to describe the technical solutions in this application more clearly, but constitute no limitation on the technical solutions provided in this application. A person of ordinary skill in the art may learn that the technical solutions provided in this application are also applicable to a similar technical problem as a new application scenario emerges.

Based on the foregoing content, the foregoing application scenario may be applied to fields such as unmanned driving, autonomous driving, assisted driving, intelligent driving, connected vehicles, security surveillance, remote interaction, surveying and mapping, or artificial intelligence.

The following uses a LiDAR as an example to show a possible case in which stray light is generated in the LiDAR.

Case 1: A scanner scatters a part of detection light to generate first stray light.

A reflective surface of the scanner may be rough, have scratches, have pits, or the like. Therefore, after the detection light is emitted to the scanner, the scanner may scatter a part of the detection light. The scattered detection light cannot be emitted to a detection area, is stray light in the LiDAR, and may be referred to as the first stray light. The first stray light may enter a detector. After the first stray light enters the detector, the detector is affected when detecting an actual echo signal. Therefore, detection accuracy of the LiDAR is reduced. It should be understood that, because the first stray light is propagated in the LiDAR for a short time period, the first stray light may be mistakenly detected by the LiDAR as an echo signal reflected by a target that is close to the LiDAR. This causes the LiDAR to detect a ghost image. Therefore, the first stray light affects detection accuracy of the LiDAR, especially when the LiDAR is applied to a short-distance detection scenario.

Case 2: The scanner reflects a part of the detection light to some mechanical parts in the LiDAR, to generate second stray light.

Due to impact of factors such as an engineering error, the scanner may reflect a part of the detection light to some mechanical parts in the LiDAR. For example, the scanner may reflect a part of the detection light to a support of the scanner, to generate the second stray light. The second stray light also affects detection accuracy of the LiDAR. Specifically, because the second stray light is also propagated in the LiDAR for a short time period, the second stray light may be mistakenly detected by the LiDAR as an echo signal reflected by a target that is close to the LiDAR. Therefore, the second stray light affects detection accuracy of the LiDAR, especially when the LiDAR is applied to a short-distance detection scenario.

Case 3: A window reflects and/or scatters the detection light, to generate third stray light.

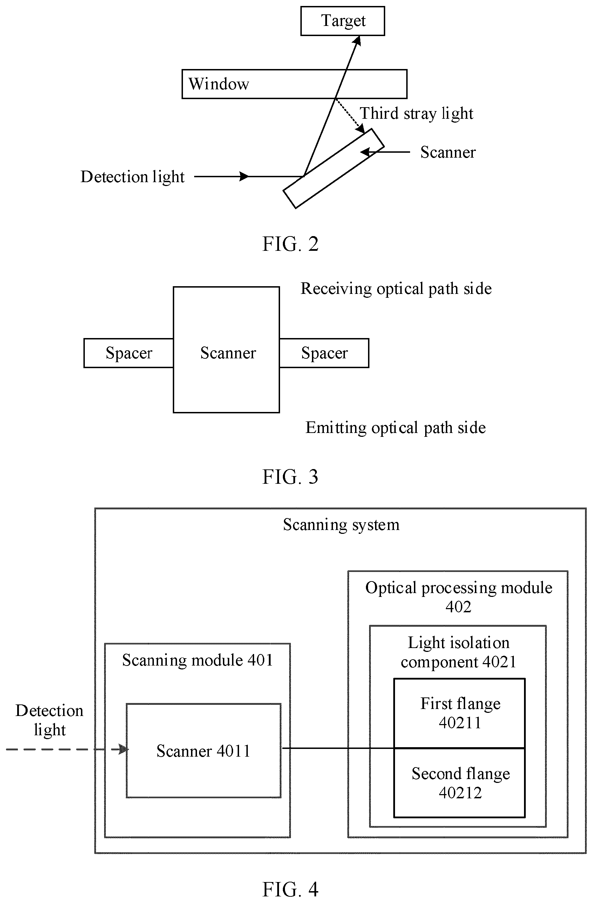

Refer to FIG. 2. After the detection light is propagated to the scanner, the detection light is reflected by the scanner to the window, and most of the detection light is transmitted to a detection area through the window, to scan the detection area. However, because the window may not implement 100% transmission, a small part of the detection light is reflected back to the LiDAR by the window, and the third stray light is generated. The third stray light may enter the detector, and consequently, the detector is affected when detecting an actual echo signal. Therefore, detection accuracy of the LiDAR is reduced. It should be understood that, because the third stray light is also propagated in the LiDAR for a short time period, the third stray light is also mistakenly detected by the LiDAR as an echo signal reflected by a target that is close to the LiDAR. This causes the LiDAR to detect a ghost image. Therefore, the third stray light also has a large impact when the LiDAR is applied to a short-distance detection scenario.

It should be noted that the foregoing possible cases of generating the stray light are merely examples. How to generate stray light is not limited in this application.

The stray light may cause interference to light (for example, an echo signal) carrying valid information. Therefore, in a possible implementation, a large spacer may be added between a receiving optical path and an emitting optical path, to isolate the emitting optical path from the receiving optical path (refer to FIG. 3). However, in a manner of additionally disposing the large spacer to isolate the emitting optical path from the receiving optical path, much detection light and many echo signals are blocked. Consequently, receiving and emitting efficiency of the LiDAR is insufficient, and a detection capability of the LiDAR is reduced (for example, a distance measurement capability is reduced).

In view of this, this application proposes two scanning systems. The scanning system may suppress or even eliminate stray light as much as possible. Further, when the scanning systems are applied to a detection system (for example, a LiDAR), detection accuracy of the detection system can be improved.

Based on the foregoing content, the following describes in detail the scanning system provided in this application with reference to FIG. 4, FIG. 5a to FIG. 5f, FIG. 6a to FIG. 6c, FIG. 7a and FIG. 7b, FIG. 8a and FIG. 8b, FIG. 9a to FIG. 9d, FIG. 10a and FIG. 10b, FIG. 11a and FIG. 11b, and FIG. 12.

It should be noted that the following scanning system may also be referred to as a stray light elimination system, and the following optical processing module may also be referred to as a stray light elimination module. It should be understood that names of the system and functional modules in embodiments of this application are merely examples. In specific implementation, the system and the functional modules may have other names. This is not specifically limited in this application.

FIG. 4 is a schematic diagram of an architecture of a scanning system according to this application. The scanning system includes a scanning module 401 and an optical processing module 402. The scanning module 401 includes a scanner 4011. The optical processing module 402 includes a light isolation component 4021. The scanner 4011 is divided into a first sub-scanner and a second sub-scanner based on the light isolation component 4021. The first sub-scanner is configured to reflect detection light from an emitting module to a detection area, and the second sub-scanner is configured to reflect an echo signal to a receiving module. The echo signal includes reflected light obtained by reflecting the detection light by a target in the detection area. The light isolation component includes a first flange 40211 and/or a second flange 40212. The first flange 40211 faces a side of the first sub-scanner, and the second flange 40212 faces a side of the second sub-scanner.

Based on the foregoing scanning system, the scanner is divided into the first sub-scanner and the second sub-scanner based on the light isolation component, the first flange included in the light isolation component faces the side of the first sub-scanner, and/or the second flange included in the light isolation component faces the side of the second sub-scanner. Therefore, stray light (for example, the first stray light in Case 1 or the second stray light in Case 2) generated due to reflection and/or scattering and/or absorption of the scanner may be propagated to the first flange and/or the second flange, and further, the first flange and/or the second flange may reflect and/or scatter the emitted stray light again. Some or even all energy of the stray light is lost through the propagation optical path, so that the stray light generated due to the scanner can be suppressed or eliminated by using the first flange and/or the second flange.

**In** a possible implementation, a scanning angle of the scanner may be changed, to change a propagation direction of the detection light. In this way, the detection light can be reflected to the detection area in different directions, so that the detection area can be scanned. It may alternatively be understood as the following: When the scanner is at one scanning angle, the scanner may reflect the detection light to one direction of the detection area; and when the scanner is at different scanning angles, the scanner may reflect the detection light to different directions of the detection area, so that the detection area can be scanned. It should be understood that the scanner scans the detection area by using a principle of geometrical optics (for example, a reflection law), and has a large scanning field of view and high scanning efficiency. It should be noted that the scanner may rotate in a continuous operation mode, or may rotate in a stepping operation mode. This is not limited in this application. In actual application, a specific mode to be used for rotation may be preset.

For example, the scanner includes a rotating mirror or a pendulum mirror. The rotating mirror may be, for example, a polyhedron rotating mirror, and may be specifically, for example, a tetrahedron rotating mirror, a hexahedron rotating mirror, or an octahedron rotating mirror. The pendulum mirror may be, for example, a pendulum mirror having a reflection function on a single surface, or may be a pendulum mirror having a reflection function on two surfaces. It should be noted that the scanner may further include another structure that enables the scanner to implement a scanning function. This is not limited in this application.

**In** a possible implementation, the scanning module may further include a motor. The motor may drive the scanner to rotate around a scanning axis, so that the scanner can be at different scanning angles.

The following separately describes the functional modules shown in FIG. 4, to provide an example of a specific implementation solution. For ease of description, none of the scanning module, the optical processing module, the first flange, and the second flange in the following is provided with an identifier.

### 1. Optical processing module

**In** a possible implementation, the optical processing module is configured to suppress or eliminate stray light generated by a system. The following shows examples of three possible structures of the optical processing module.

Structure 1: The optical processing module includes a light isolation component.

The following provides examples of three possible structures of the light isolation component. In the following description, an example in which the scanner is the tetrahedron rotating mirror is used, and an example in which an optical path of stray light is a propagation optical path corresponding to one surface of the tetrahedron rotating mirror is used for description.

Structure 1.1: The light isolation component includes a bottom plate and a first flange.

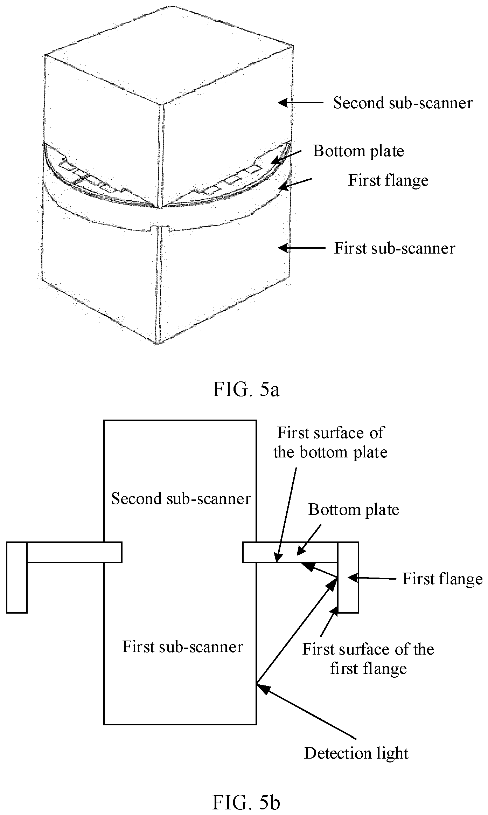

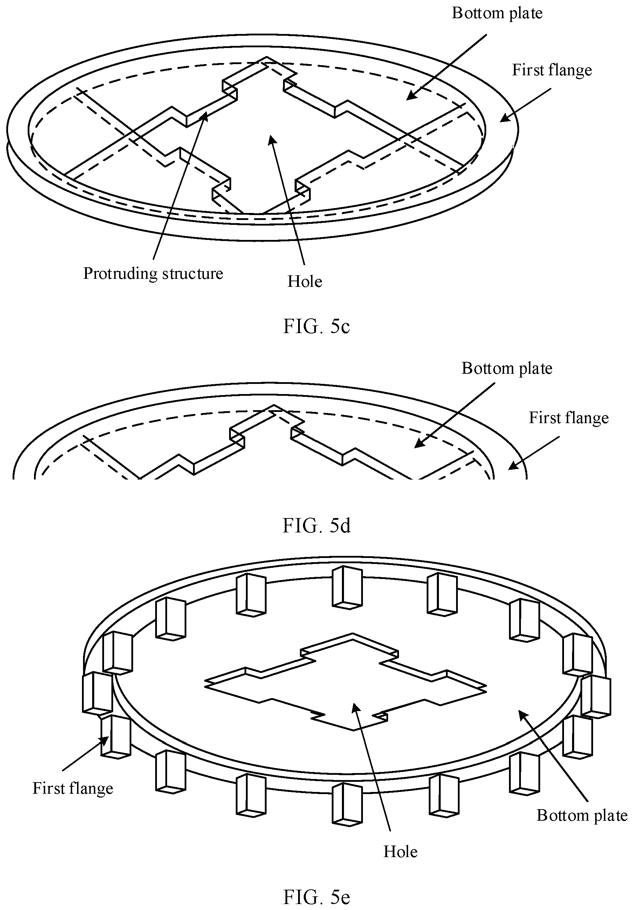

FIG. 5a is a schematic diagram of a structure of a light isolation component according to this application. The light isolation component includes a bottom plate and a first flange. The first flange surrounds a periphery of the bottom plate (that is, the first flange is disposed along an edge of the bottom plate). The first flange faces a side of the first sub-scanner, and the bottom plate is disposed (for example, fastened) between the first sub-scanner and the second sub-scanner. According to the invention, the bottom plate is embedded into grooves in a middle area of the scanner, so that the bottom plate is disposed between the first sub-scanner and the second sub-scanner. For example, the bottom plate may be embedded (or inserted) into shallow grooves in a middle area of the scanner. Refer to FIG. 5c. Protruding structures are disposed in a middle area of the bottom plate, and a middle area formed by these protruding structures is a hole. These protruding structures may be nested in grooves corresponding to the middle area of the scanner, so that the bottom plate is disposed between the first sub-scanner and the second sub-scanner. Based on this fastening manner, the scanner and the light isolation component rotate synchronously around the scanning axis of the scanner. In other words, the scanner and the light isolation component share the scanning axis of the scanner. Based on this, reliability of the scanner is also high. For another example, the bottom plate is nested between the first sub-scanner and the second sub-scanner. Specifically, the middle area of the bottom plate may be excavated, to embed the bottom plate into the excavated area. Based on the specified manner, the light isolation component may not rotate with rotation of the scanner. Further, the bottom plate may be further fastened by using a screw, an adhesive, or the like. It should be noted that FIG. 5a is merely an example provided in this embodiment. A specific shape of the bottom plate is not limited in this embodiment. Any shape that enables the bottom plate to be disposed between the first sub-scanner and the second sub-scanner falls within the protection scope of this application.

In a possible implementation, the first flange includes a first surface (refer to FIG. 5b below). The first surface of the first flange is a surface that is of the first flange and that faces the scanner. In other words, the first surface of the first flange is disposed opposite to a surface that is of the scanner and that is used to emit the detection light. Further, optionally, the first surface of the first flange has an extinction function. For example, the extinction function may be implemented by using an extinction material (like matte paint) spraying process, an electrophoresis process, an anodizing process, or a coating process. A reflectivity of the first surface that is of the first flange and that has the extinction function is not greater than 10%, not greater than 8%, not greater than 4%, or the like. It may alternatively be understood as the following: A reflectivity of the first surface that is of the first flange and that has the extinction function is low.

In a possible implementation, the bottom plate also includes a first surface (refer to FIG. 5b below). The first surface of the bottom plate is a surface that is of the bottom plate and that faces a side of the first flange. The first surface of the bottom plate may also have an extinction function. For descriptions of having the extinction function, refer to the foregoing related descriptions. Details are not described herein again.

It should be noted that the first flange may fully surround the periphery of the bottom plate. Refer to FIG. 5c. That is, the first flange is disposed on each of four surfaces surrounding the tetrahedron rotating mirror. Alternatively, the first flange may partially surround the periphery of the bottom plate. That is, the first flange is disposed on one, two, or three of the four surfaces surrounding the tetrahedron rotating mirror. Refer to FIG. 5d. The first flange is disposed on two surfaces surrounding the tetrahedron rotating mirror. Alternatively, the first flange may surround the periphery of the bottom plate at uniform intervals or non-uniform intervals (similar to a fence type) around at least one surface of the tetrahedron rotating mirror. Refer to FIG. 5e. The first flange formed at uniform intervals is disposed on each of the four surfaces surrounding the tetrahedron rotating mirror, to surround the periphery of the bottom plate. It should be noted that heights of the first flanges disposed around the tetrahedron rotating mirror may be the same, or may be different. This is not limited in this application.

In a possible implementation, a value of an included angle formed between the first flange and the bottom plate is within (0°, 180°). For example, the value of the included angle between the first flange and the bottom plate is equal to 90° (for example, a downward "L shape"), that is, the first flange is vertical to the bottom plate. For another example, the value of the included angle between the first flange and the bottom plate is equal to 30°, 45°, 60°, 120°, or the like. Details are not listed one by one herein again. It should be noted that the first flange may be a plane (for example, a plane sheet) or a curved surface. This is not limited in this application. It should be understood that FIG. 5a shows an example in which the first flange is vertical to the bottom plate and the first flange is a plane.

In a possible implementation, the bottom plate and the first flange may be integrally formed, or the first flange may be fastened to the bottom plate by using an adhesive (for example, a dispensing adhesive) or a screw.

When the first sub-scanner scatters emitted detection light to generate the first stray light, based on the light isolation component shown in FIG. 5a, for a propagation optical path of the first stray light, refer to FIG. 5b. The propagation optical path is specifically as follows: The first stray light is scattered by the first sub-scanner to the first surface of the first flange, and is reflected and/or scattered by the first surface of the first flange to the first surface of the bottom plate. Further, the first stray light may be reflected and/or scattered by the first surface of the bottom plate, to lose a large amount of energy. In other words, the first stray light is reflected and/or scattered between the first surface of the first flange and the first surface of the bottom plate. After the first stray light passes through the propagation optical path, a large amount of energy is lost, and even remaining energy may be ignored. Further, the first surface of the bottom plate and/or the first surface of the first flange have/has an extinction function (for example, coated with an extinction material with a low reflectivity). Therefore, a larger amount of energy of the first stray light is lost, so that the first stray light can be suppressed or even eliminated.

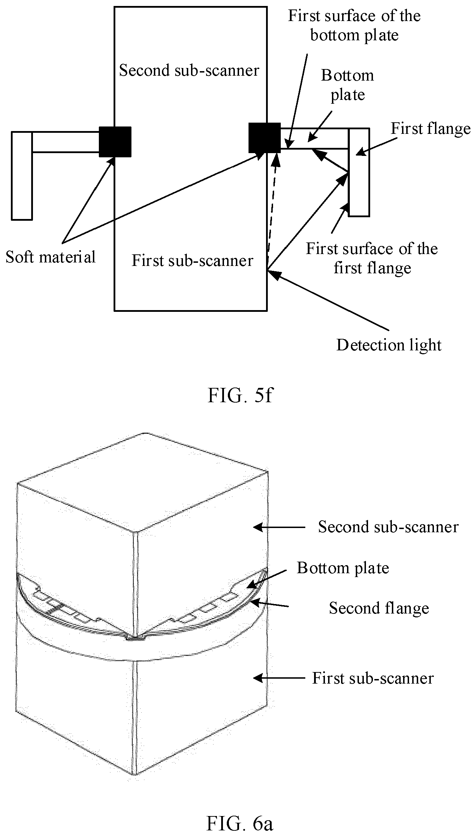

Because both the scanner and the light isolation component are made of rigid materials, there may be a specific gap between the scanner and the light isolation component. To prevent the first stray light from entering the receiving module through the gap as much as possible, a soft material may be filled between the light isolation component and the scanner. For details, refer to FIG. 5f. In this way, the first stray light can be prevented from entering the receiving module through the gap between the scanner and the light isolation component, so that interference caused by the first stray light is further suppressed or eliminated. For example, the soft material includes but is not limited to silicone rubber, glue, or the like. It should be noted that the software material may be filled between a part of the light isolation component and the scanner. With reference to FIG. 5f, the soft material may be filled in some gaps between the tetrahedron rotating mirror and the light isolation component. Alternatively, the soft material may be filled in all gaps between the tetrahedron rotating mirror and the light isolation component.

In a possible implementation, the soft material may be filled in the gap between the scanner and the bottom plate of the light isolation component in a secondary injection manner, an adhesive dispensing manner, or the like.

Structure 1.2: The light isolation component includes a bottom plate and a second flange.

In a possible implementation, a value of an included angle formed between the second flange and the bottom plate is within (0°, 180°). In other words, the value of the included angle formed between the second flange and the bottom plate is a value within (0°, 180°). For example, the value of the included angle between the second flange and the bottom plate is equal to 90° (for example, an upward "L shape"), that is, the second flange is vertical to the bottom plate. Alternatively, the value of the included angle between the second flange and the bottom plate is equal to 30°, 45°, 60°, 120°, 145°, or the like. It should be noted that the second flange may be a plane (for example, a plane sheet) or a curved surface. This is not limited in this application.

Further, optionally, the bottom plate and the second flange may be integrally formed, or the second flange may be fastened to the bottom plate by using an adhesive (for example, a dispensing adhesive) or a screw.

In a possible implementation, the second flange may fully surround a periphery of the bottom plate. With reference to FIG. 6a. That is, the second flange is disposed on each of four surfaces surrounding the tetrahedron rotating mirror. Alternatively, the second flange may partially surround a periphery of the bottom plate. With reference to FIG. 6a. That is, the second flange is disposed on one, two, or three of four surfaces surrounding the tetrahedron rotating mirror. Alternatively, the second flange may surround a periphery of the bottom plate at uniform intervals or non-uniform intervals (similar to a fence type) around at least one surface of the tetrahedron rotating mirror.

FIG. 6a is a schematic diagram of a structure of another light isolation component according to this application. The light isolation component includes a bottom plate and a second flange. The second flange surrounds a periphery of the bottom plate (that is, the second flange is disposed along an edge of the bottom plate). The second flange faces a side of the second sub-scanner, and the bottom plate is disposed between the first sub-scanner and the second sub-scanner (for details, refer to descriptions in Structure 1.1).

In a possible implementation, the second flange includes a second surface. The second surface of the second flange is a surface that is of the second flange and that faces a support. It may alternatively be understood as the following: The second surface of the second flange is disposed opposite to a surface that is of the support and that is used for reflecting and/or scattering the detection light. Further, optionally, the second surface of the second flange has an extinction function. For descriptions of having the extinction function, refer to the foregoing descriptions. Details are not described herein again. It should be understood that the scanning module may further include a support. The support is configured to support the scanner, or it may be understood as the following: The support is configured to fasten the scanner. For example, the support may be distributed around the scanner, to fasten the scanner. It should be noted that the support is fastened and does not rotate with rotation of the scanner. For example, the support may be fastened to a motor that is configured to drive the scanner to rotate.

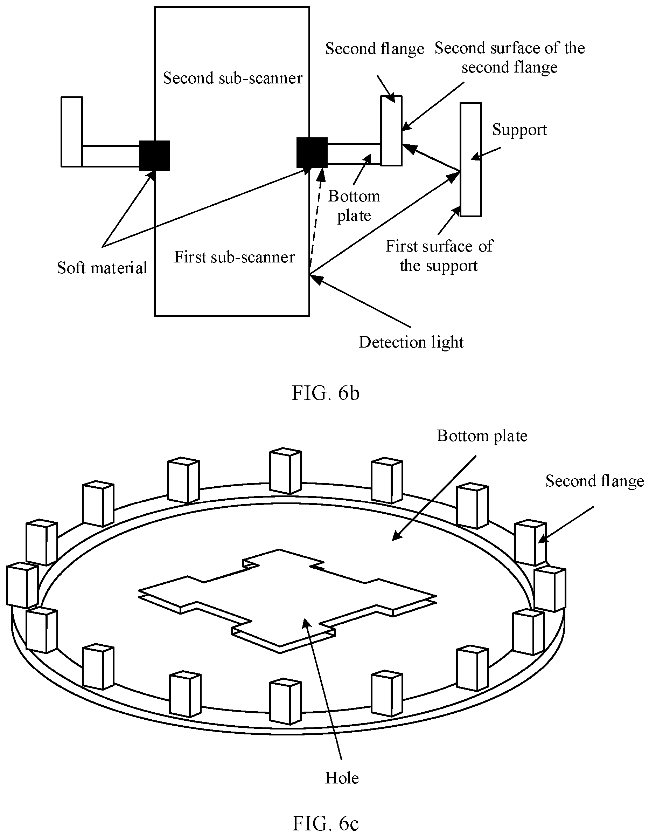

In a possible implementation, the first surface (refer to FIG. 6b below) that is of the support and that faces the second flange also has an extinction function. For descriptions of having the extinction function, refer to the foregoing descriptions. Details are not described herein again. In other words, a first surface of the support is disposed opposite to the second surface of the second flange.

It should be noted that the second flange may fully surround the periphery of the bottom plate. Refer to FIG. 6a. That is, the second flange is disposed on each of four surfaces surrounding the tetrahedron rotating mirror. Alternatively, the second flange may partially surround the periphery of the bottom plate. That is, the second flange is disposed on one, two, or three of the four surfaces surrounding the tetrahedron rotating mirror. Alternatively, the second flange may surround the periphery of the bottom plate at uniform intervals or non-uniform intervals (similar to a fence type) around at least one surface of the tetrahedron rotating mirror. Refer to FIG. 6c. The second flange formed at uniform intervals is disposed on each of the four surfaces surrounding the tetrahedron rotating mirror, to surround the periphery of the bottom plate. It should be noted that heights of the second flanges disposed around the tetrahedron rotating mirror may be the same, or may be different. This is not limited in this application.

In a possible implementation, a value of an included angle formed between the second flange and the bottom plate is within (0°, 180°). For example, the value of the included angle between the second flange and the bottom plate is equal to 90° (for example, an upward "L shape"), that is, the second flange is vertical to the bottom plate. For another example, the value of the included angle between the second flange and the bottom plate is equal to 30°, 45°, 60°, 120°, or the like. Details are not listed one by one herein again. It should be noted that the second flange may be a plane or a curved surface. This is not limited in this application. It should be understood that FIG. 6a shows an example in which the second flange is vertical to the bottom plate and the second flange is a plane.

In a possible implementation, the bottom plate and the second flange may be integrally formed, or the second flange may be fastened to the bottom plate by using an adhesive (for example, a dispensing adhesive) or a screw.

When the first sub-scanner reflects the detection light to the first surface of the support to generate the second stray light, based on the isolation component in FIG. 6a, for a propagation optical path of the second stray light, refer to FIG. 6b. The propagation optical path is specifically as follows: The second stray light is reflected by the first sub-scanner to the first surface of the support, and is reflected and/or scattered by the first surface of the support to the second surface of the second flange. In other words, the second stray light is scattered and/or reflected between the first surface of the support and the second surface of the second flange. After the second stray light passes through the propagation optical path, a large amount of energy is lost, and even remaining energy may be ignored. Further, the first surface of the support and/or the second surface of the second flange have an extinction function (for example, coated with an extinction material with a low reflectivity). Therefore, a larger amount of energy of the second stray light is lost, so that the second stray light can be suppressed or even eliminated.

There may be a specific gap between the scanner and the light isolation component. To prevent the second stray light from entering the receiving module through the gap as much as possible, a soft material may be filled between the light isolation component and the scanner (refer to FIG. 6b). For related descriptions (such as a filling manner and a specific material) of the soft material, refer to the foregoing related descriptions. Details are not described herein again.

Structure 1.3: The light isolation component includes a bottom plate, a first flange, and a second flange.

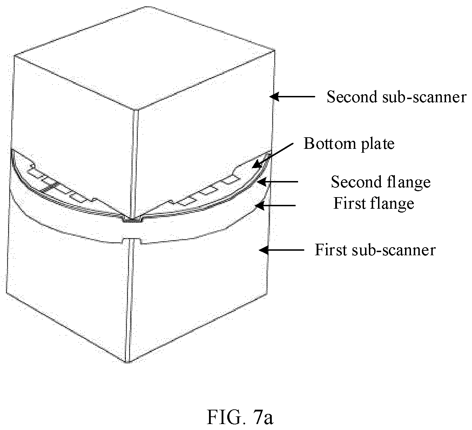

FIG. 7a is a schematic diagram of a structure of another light isolation component according to this application. The light isolation component includes a bottom plate, a first flange, and a second flange. The first flange surrounds a periphery of the bottom plate on a side facing the first sub-scanner, and the second flange surrounds the periphery of the bottom plate on a side facing the second sub-scanner (that is, the first flange and the second flange are disposed along an edge of the bottom plate, and directions of the first flange and the second flange are opposite to each other). The bottom plate is disposed between the first sub-scanner and the second sub-scanner (for details, refer to descriptions in Structure 1.1).

In a possible implementation, the first flange includes a first surface and a second surface. The first surface of the first flange is a surface that is of the first flange and that faces the scanner, and the second surface of the first flange is a surface that faces the support. In other words, the first surface of the first flange is disposed opposite to a surface that is of the scanner and that is used for emitting and/or scattering the detection light, and the second surface of the first flange is disposed opposite to a first surface of the support. Further, optionally, both the first surface and the second surface of the first flange may have an extinction function, and/or the second surface of the second flange may also have an extinction function, and/or the first surface of the bottom plate may also have an extinction function. For related descriptions, refer to the foregoing descriptions. Details are not described herein again.

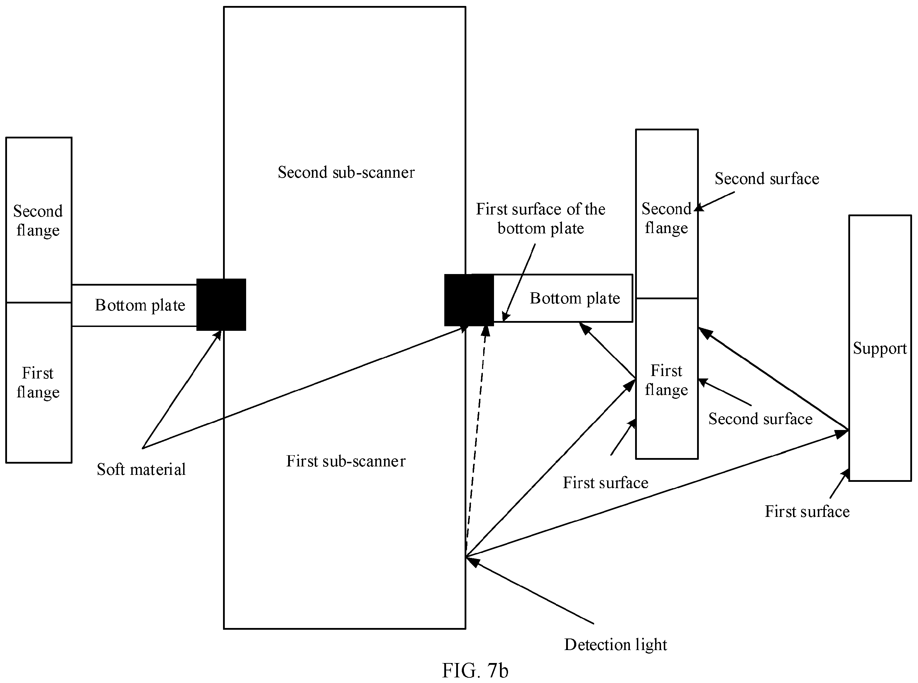

In a possible implementation, a value of an included angle formed between the first flange and the bottom plate is within (0°, 180°), and a value of an included angle formed between the second flange and the bottom plate is also within (0°, 180°). For details, refer to the foregoing related descriptions. Details are not described herein again. In FIG. 7b, the second flange is vertical to the bottom plate, and the first flange is vertical to the bottom plate (for example, a "T shape"). It should be understood that the value of the included angle formed between the first flange and the bottom plate and the value of the included angle formed between the second flange and the bottom plate may be the same, or may be different. This is not limited in this application.

In a possible implementation, the bottom plate, the first flange, and the second flange may be integrally formed, or the first flange and the second flange may be fastened to the bottom plate by using an adhesive (for example, a dispensing adhesive) or a screw. It should be noted that a manner of fastening the first flange to the bottom plate and a manner of fastening the second flange to the bottom plate may be the same, or may be different. This is also not limited in this application.

It should be noted that a manner in which the first flange surrounds the periphery of the bottom plate and a manner in which the second flange surrounds the periphery of the bottom plate may be the same, or may be different. This is not limited in this application. Specifically, for the manner in which the first flange surrounds the bottom plate, refer to related descriptions in Structure 1.1. For the manner in which the second flange surrounds the bottom plate, refer to related descriptions in Structure 1.2. Details are not described herein again.

The first sub-scanner may scatter the detection light to generate the first stray light, and may further reflect the detection light to the support to generate the second stray light.

For propagation optical paths of the first stray light and the second stray light, refer to FIG. 7b. Details are as follows. The first stray light is scattered to the first surface of the first flange, and is reflected and/or scattered by the first surface of the first flange to the first surface of the bottom plate, that is, the first stray light is reflected and/or scattered between the first surface of the first flange and the first surface of the bottom plate. Further, the first surface of the bottom plate and/or the first surface of the first flange have/has an extinction function (for example, coated with an extinction material with a low reflectivity). Therefore, a larger amount of energy of the first stray light is lost, so that the first stray light can be suppressed or eliminated. The second stray light is reflected by the first sub-scanner to the first surface of the support, and is scattered and/or reflected by the first surface of the support to the second surface of the second flange, that is, the second stray light is scattered and/or reflected between the first surface of the support and the second surface of the second flange. Further, the first surface of the support and/or the second surface of the second flange have/has an extinction function (for example, coated with an extinction material with a low reflectivity). Therefore, a larger amount of energy of the second stray light is lost, so that the second stray light can be suppressed or eliminated.

Based on Structure 1.3, there may be a specific gap between the scanner and the light isolation component. To prevent the first stray light and/or the second stray light from entering the receiving module through the gap as much as possible, a soft material may be filled between the light isolation component and the scanner (refer to FIG. 7b). For related descriptions (such as a filling manner and a specific material) of the soft material, refer to the foregoing related descriptions. Details are not described herein again.

It should be noted that, with reference to FIG. 7b, when a length of the first flange is short, the first sub-scanner may further reflect a part of the detection light to the support, to generate fourth stray light. The fourth stray light may be scattered and/or reflected between the second surface of the first flange and the first surface of the support, and/or the fourth stray light is scattered and/or reflected between the second surface of the second flange and the first surface of the support, to suppress or even eliminate the fourth stray light.

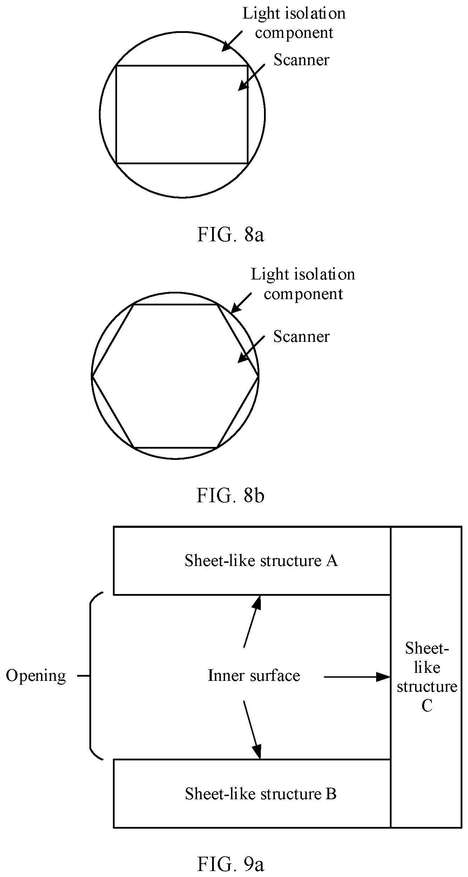

In a possible implementation, a projection of the light isolation component on a first plane is a circumcircle of a projection of the scanner on the first plane, where the first plane is a plane vertical to a scanning axis. This helps reduce a volume of the optical processing module, so that the scanning system can be miniaturized. Refer to FIG. 8a. A schematic diagram of projections of the scanner and the light isolation component on the first plane is provided by using an example in which the scanner is a tetrahedron rotating mirror. Refer to FIG. 8b. A schematic diagram of projections of the scanner and the light isolation component on the first plane is provided by using an example in which the scanner is a hexahedron.

In a possible implementation, a material of the light isolation component may be, for example, plastic with a low reflectivity (for example, less than 10%), for example, silica gel.

In the foregoing embodiment, an example in which the first flange and/or the second flange surround the periphery of the bottom plate is used. It should be understood that the first flange and/or the second flange may alternatively be disposed on the bottom plate, that is, the first flange and/or the second flange may be disposed at any location between a center and the edge of the bottom plate.

Structure 2: The optical processing module includes at least two sheet-like structures.

In a possible implementation, the at least two sheet-like structures form a first structure having at least one opening. A first included angle θ between an opening direction of the first structure and the window is one of [0, 90°], and the first included angle is an included angle in a direction facing the scanner. Further, optionally, at least one of the at least two sheet-like structures has an extinction function. For example, a reflectivity of the sheet-like structure is less than a reflectivity threshold, where the reflectivity threshold may be, for example, 10%, 8%, or 4%. In other words, the sheet structure has a low reflectivity.

For example, a material of the sheet-like structure may be plastic with a low reflectivity (for example, less than 10%), for example, silica gel. It should be noted that the material of the sheet-like structure and the material of the light isolation component may be same, or may be different. This is not limited in this application.

It should be noted that shapes of the at least two sheet-like structures may be the same, or may be different, or may be partially the same. The shape of the sheet-like structure is not limited to a rectangle. For example, the shape of the sheet-like structure may alternatively be an "L shape", or another irregular pattern. In addition, lengths of the at least two sheet-like structures may be the same, or may be different from each other, or may be partially the same. Thicknesses of the at least two sheet-like structures may be the same, or may be different from each other, or may be partially the same. This is not limited in this application either.

The following shows examples of two possible first structures based on a structure formed by the at least two sheet-like structures.

Structure 2.1: A first structure formed by the at least two sheet-like structures is a semi-open component.

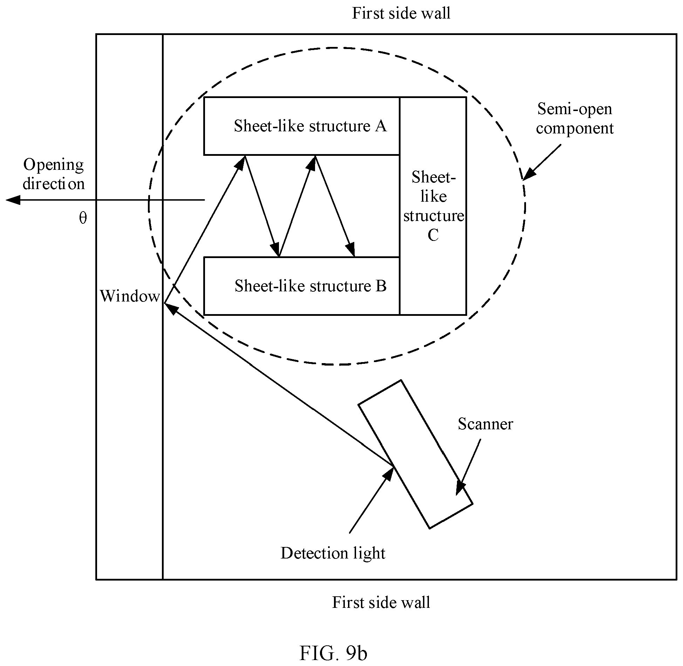

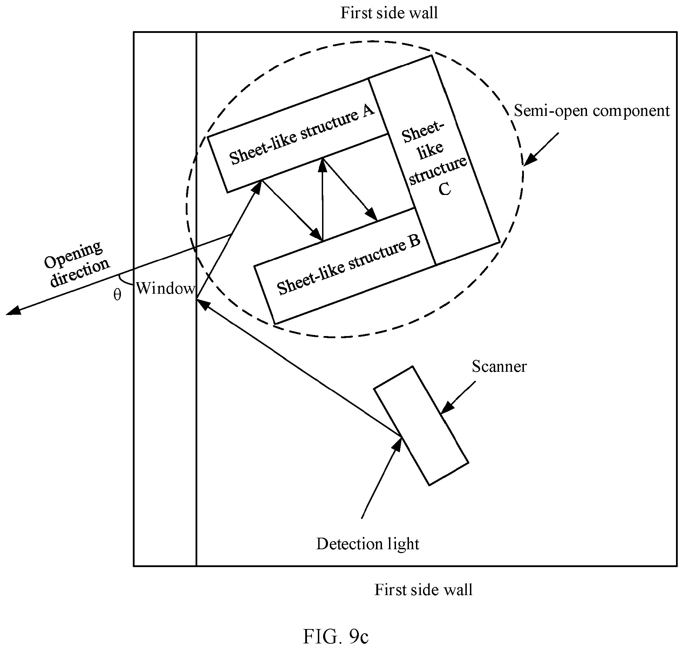

In a possible implementation, the first structure formed by the at least two sheet-like structures is a semi-open component. An opening direction of the semi-open component faces the window (refer to FIG. 9b or FIG. 9c below). It should be understood that the scanning system may further include the window, to prevent interference caused by an external environment to the scanning system.

FIG. 9a is a schematic diagram of a structure of a semi-open component according to this application. For example, the semi-opened component includes three sheet-like structures (for example, a sheet-like structure A, a sheet-like structure B, and a sheet-like structure C). The sheet-like structure A is spliced with the sheet-like structure C, and the sheet-like structure B is also spliced with the sheet-like structure C. The sheet-like structure A and the sheet-like structure B are arranged at intervals to form an opening, and a direction of the opening faces the window. In this example, the sheet-like structure may be a baffle. The sheet-like structure A, the sheet-like structure B, and the sheet-like structure C may be integrally formed, or may be spliced into the semi-open component.

In a possible implementation, a shape formed by splicing the three sheet-like structures may alternatively be, for example, a "II" shape, a "η" shape, a "π" shape, a "U" shape, or a semi-closed rectangle. It should be understood that FIG. 9a shows an example in which the three sheet-like structures are spliced into the semi-closed rectangle.

It should be noted that the sheet-like structure A and the sheet-like structure B may be parallel, or may be non-parallel. This is not limited in this application.

In a possible implementation, the semi-open component is disposed between the scanner and a first side wall of the scanning system. Refer to FIG. 9b. It should be understood that the first side wall of the scanning system includes two opposite side walls connected to the window. In FIG. 9b, an example in which the semi-open component is disposed between one of the first side walls and the scanner is used. Based on this, a propagation optical path of the third stray light is specifically as follows: A part of the detection light is reflected and/or scattered by the window to form the third stray light, and the third stray light enters the semi-open component after being reflected and/or scattered by the window, and is reflected and/or scattered between inner surfaces of the semi-open component. That is, the third stray light is reflected and/or scattered to an inner surface of the sheet-like structure A, and is reflected and/or scattered by the inner surface of the sheet-like structure A to an inner surface of the sheet-like structure B. Then, the third stray light is reflected and/or scattered by the inner surface of the sheet-like structure B to the inner surface of the sheet-like structure A. In this way, the third stray light is reflected and/or scattered back and forth in sequence. Further, similarly, an inner surface of the sheet-like structure A or an inner surface of the sheet-like structure B may reflect and/or scatter the third stray light to an inner surface of the sheet-like structure C, and the inner surface of the sheet-like structure C may reflect and/or scatter the third stray light to the inner surface of the sheet-like structure B or the inner surface of the sheet-like structure A. In other words, the third stray light is reflected and/or scattered between the inner surfaces of the semi-open component. Based on the propagation optical path, a large amount of energy of the third stray light is lost, and even remaining energy may be ignored, so that the third stray light can be suppressed or even eliminated.

It should be noted that, that the opening direction of the semi-open component faces the window may be understood as the following: A value of a first included angle between the opening direction of the semi-open component and the window is within (0°, 90°], that is, the value of the first included angle is one of (0°, 90°]. In FIG. 9b, an example in which the value of the first included angle between the opening direction and the window is 90° is used. In FIG. 9c, an example in which the value of the first included angle between the opening direction and the window is greater than 0° and less than 90° is used.

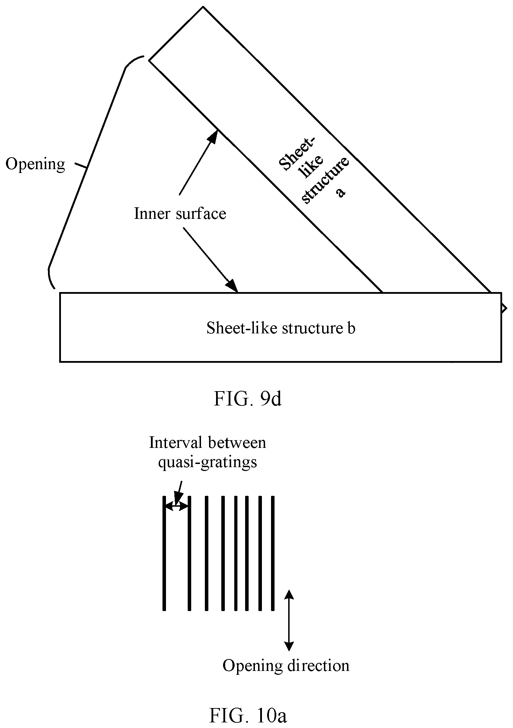

FIG. 9d is a schematic diagram of a structure of another semi-open component according to this application. For example, the semi-open component includes two sheet-like structures (a sheet-like structure a and a sheet-like structure b). One end of the sheet-like structure a is spliced with one end of the sheet-like structure b. The other end of the sheet-like structure a is separated from the other end of the sheet-like structure b to form an opening, and an opening direction faces the window. Further, optionally, a value of an included angle formed between the two sheet-like structures is within (0°, 90°). In other words, the value of the included angle formed between the two sheet-like structures is one of (0°, 90°). It should be noted that the sheet-like structure a and the sheet-like structure b may be integrally formed, or may be spliced into the semi-open component.

Based on FIG. 9d, a propagation optical path of the third stray light is specifically as follows: A part of the detection light is reflected and/or scattered by the window to form the third stray light, and the third stray light enters the semi-open component after being reflected and/or scattered by the window, and is reflected and/or scattered between inner surfaces of the semi-open component. That is, the third stray light is reflected and/or scattered to an inner surface of the sheet-like structure a, and is reflected and/or scattered by the inner surface of the sheet-like structure a to an inner surface of the sheet-like structure b. Then, the third stray light is reflected and/or scattered by the inner surface of the sheet-like structure b to the inner surface of the sheet-like structure a. In this way, the third stray light is reflected and/or scattered back and forth in sequence. After the third stray light is propagated through the propagation optical path, a large amount of energy of the third stray light is lost, and even remaining energy may be ignored, so that the third stray light can be suppressed or even eliminated.

It should be noted that a quantity of sheet-like structures forming the semi-open component is not limited in this application, and there may be two or more sheet-like structures. With reference to FIG. 9a or FIG. 9d, there is only one sheet-like structure on one edge, or one edge may be formed by splicing a plurality of sheet-like structures.

In a possible implementation, an inner surface of the semi-open component may have an extinction function. With reference to FIG. 9a, FIG. 9b, or FIG. 9c, the inner surface of an open component includes a surface that is of the sheet-like structure A and that faces the sheet-like structure B, a surface that is of the sheet-like structure B and that faces the sheet-like structure A, and a surface that is of the sheet-like structure C and that faces the opening. At least one of the three surfaces has an extinction function. With reference to FIG. 9d, the inner surface of the open component includes a surface that is in the sheet-like structure a and that faces the sheet-like structure b, and a surface that is in the sheet-like structure b and that faces the sheet-like structure a. At least one of the two surfaces has an extinction function. For descriptions of having the extinction function, refer to the foregoing related descriptions. Details are not described herein again.

Structure 2.2: A first structure formed by the at least two sheet-like structures is a quasi-grating (or referred to as grating teeth).

In a possible implementation, the first structure formed by the at least two sheet-like structures is a quasi-grating. In other words, the quasi-grating is an optical device formed by arranging the at least two sheet-like structures at intervals, and the intervals formed by arranging the at least two sheet-like structures may be equal or unequal. A range of the interval may be, for example, (0 mm, 5 mm]. In other words, the sheet-like structures may be periodically arranged, or may be aperiodically arranged. This is not limited in this application. It should be understood that, in this example, the sheet-like structure may also be referred to as a tooth.

It should be noted that the at least two sheet-like structures may be arranged in parallel, or may be arranged in non-parallel. This is not limited in this application.

FIG. 10a is a schematic diagram of a structure of a quasi-grating according to this application. For example, the quasi-grating includes eight sheet-like structures. Some of seven intervals formed between the eight sheet-like structures are the same, and some of the seven intervals are different. In this example, the eight sheet-like structures are arranged in parallel. Further, optionally, a surface of the quasi-grating may have an extinction function. For more detailed descriptions of having the extinction function, refer to the foregoing related descriptions. Details are not described herein again.

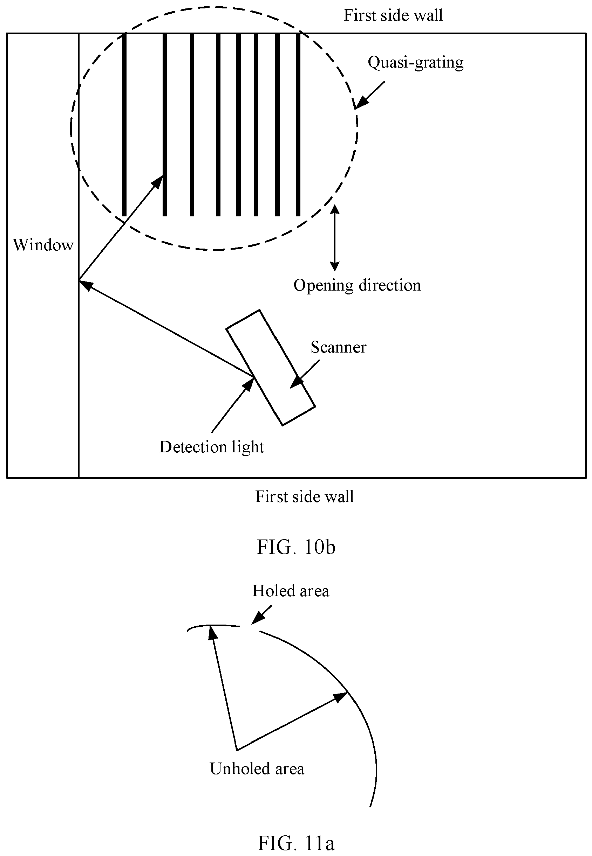

In a possible implementation, the quasi-grating may be disposed on the first side wall. Refer to FIG. 10b. It should be understood that the first side wall of the scanning system includes two opposite side walls connected to the window. In FIG. 10b, an example in which the quasi-grating is disposed between one of the first side walls and the scanner is used. An opening direction of the quasi-grating faces a field of view or the scanner. In this example, a value of a first included angle between the opening direction of the quasi-grating and the window is 0°, that is, the opening direction of the quasi-grating faces the scanner in this example.

Based on FIG. 10b, a propagation optical path of the third stray light is specifically as follows: A part of the detection light is reflected and/or scattered by the window to form the third stray light, and the third stray light enters the quasi-grating after being reflected and/or scattered by the window, and is reflected and/or scattered in the quasi-grating. In other words, the third stray light is confined to the quasi-grating, to be reflected and/or scattered for a plurality of times. After the third stray light is propagated through the propagation optical path, a large amount of energy of the third stray light is lost, and even remaining energy may be ignored, so that the third stray light can be suppressed or even eliminated.

Structure 3: The optical processing module includes a punctured mechanical part.

In a possible implementation, the punctured mechanical part may be obtained by puncturing a mechanical part in the scanning system, or may be a punctured mechanical part additionally added to the scanning system. The mechanical part in the scanning system includes but is not limited to a mechanical structural part that performs functions such as supporting and covering, for example, a mechanical part like the foregoing support used for fastening the scanner, or a light shielding plate. For example, a hole may be drilled on the mechanical part in the scanning system in a mechanical drilling manner.

FIG. 11a is a schematic diagram of a structure of a punctured mechanical part according to this application. The punctured mechanical part includes a holed area and an unholed area. A hole in the holed area may allow the third stray light to pass through, and the unholed area is configured to reflect and/or scatter the third stray light, to suppress or eliminate the third stray light.

It should be noted that the punctured mechanical part shown in FIG. 11a is merely an example. A shape of a hole in the punctured mechanical part is not limited in this application, and may be a regular pattern or an irregular pattern. Any shape through which the third stray light can be transmitted falls within the protection scope of this application. In addition, a location of the holed area is not limited in this application either. Any location at which the third stray light can be transmitted falls within the protection scope of this application. A size of the hole is also not limited in this application. Any size that enables the third stray light to be transmitted falls within the protection scope of this application.

In a possible implementation, an outer surface of the unholed area of the punctured mechanical part has an extinction function. The outer surface of the unholed area is a surface facing away from a side of the scanner. This may alternatively be understood as the following: The outer surface of the unholed area is a surface facing the first side wall and/or a second side wall.

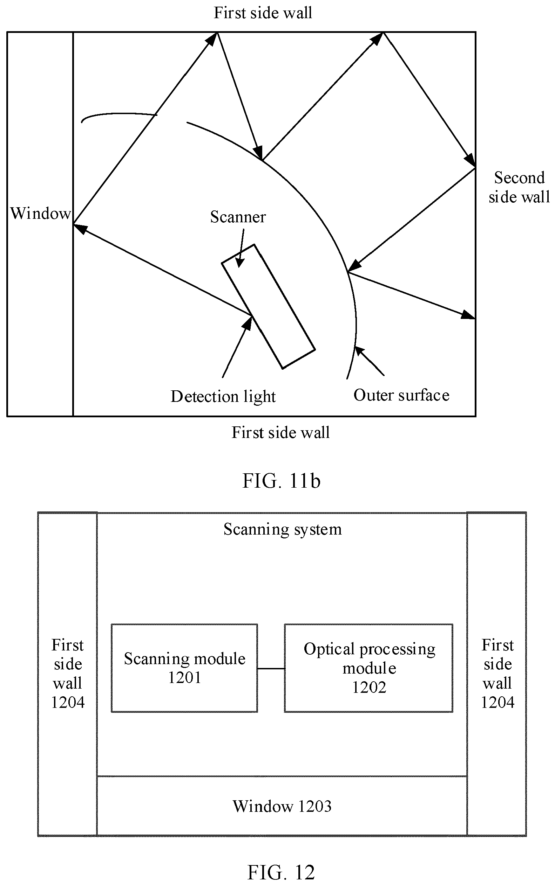

In a possible implementation, the punctured mechanical part may be disposed between the scanner, the first side wall, and/or the second side wall. Refer to FIG. 11b. Based on this, a propagation optical path of the third stray light is specifically as follows: The third stray light is transmitted through the holed area of the punctured mechanical part to a structure like the first side wall and/or the second side wall of the detection system, is reflected and/or scattered by the structure like the first side wall and/or the second side wall to the outer surface of the unholed area, is reflected and/or scattered by the outer surface of the unholed area to the structure like the first side wall and/or the second side wall of the detection system, and then, is reflected and/or scattered by the structure like the first side wall and/or the second side wall to the outer surface of the unholed area. The third stray light is reflected and/or scattered in sequence, so that energy of the third stray light is consumed, and even remaining energy can be ignored, to suppress or even eliminate the third stray light.

Based on the optical processing module in Structure 2 and Structure 3, the third stray light generated when the window reflects and/or scatters the detection light may be eliminated.

It should be noted that the structures of the optical processing module provided above may be used independently, or may be used in combination. For example, Structure 1 and Structure 2 are combined, that is, the optical processing module includes the light isolation component and the at least two sheet-like structures. The light isolation component may suppress or eliminate the first stray light and the second stray light, and the at least two sheet-like structures may suppress or eliminate the third stray light. It should be understood that a combination of Structure 1 and Structure 2 may be a combination of any one of the three structures of Structure 1 and any one of the two structures of Structure 2.

For another example, Structure 1 and Structure 3 are combined. The optical processing module includes the light isolation component and the punctured mechanical part. The light isolation component may suppress or eliminate the first stray light and the second stray light, and the punctured mechanical part may suppress or eliminate the third stray light. It should be understood that a combination of Structure 1 and Structure 3 may be a combination of any one of the three structures of Structure 1 and Structure 3.

For another example, Structure 1, Structure 2, and Structure 3 are combined, that is, the optical processing module includes the light isolation component, the at least two sheet-like structures, and the punctured mechanical part. The light isolation component may suppress or eliminate the first stray light and the second stray light, and the at least two sheet-like structures and the punctured mechanical part may suppress or eliminate the third stray light. It should be understood that a combination of Structure 1, Structure 2, and Structure 3 may be a combination of any one of the three structures of Structure 1, any one of the two structures of Structure 2, and Structure 3.

Certainly, the structure of the optical processing module in this application may alternatively be another possible combination. This is not listed one by one herein again.

FIG. 12 is a schematic diagram of an architecture of another scanning system according to this application. The scanning system includes a scanning module 1201, an optical processing module 1202, and a window 1203. Further, the scanning system may further include a first side wall 1204. The scanning module 1201 is configured to: reflect detection light from an emitting module to the window 1203, and reflect an echo signal to a receiving module, where the echo signal includes reflected light obtained by reflecting the detection light by a target in a detection area. The optical processing module 1202 includes at least two sheet-like structures, the at least two sheet-like structures form a first structure having at least one opening, a value of a first included angle between an opening direction of the first structure and the window 1203 is within [0°, 90°], and the first included angle is an included angle in a direction towards the scanning module 1201. The first side wall 1204 is a side wall connected to the window 1203.

Based on the scanning system, because the window in the scanning system may not implement 100% transmission, a small part of the detection light is reflected back by the window to generate third stray light. The first structure having at least one opening may be used to confine the third stray light to the first structure, and the third stray light is reflected and/or scattered for a plurality of times. In this way, energy of the third stray light is lost, thereby helping reduce the third stray light in the system.

The following shows examples of two possible structures of the optical processing module 1202 in the scanning system. For ease of solution description, the following optical processing module is not provided with an identifier.

Structure A: A first structure formed by the at least two sheet-like structures is a semi-open component.

For Structure A, refer to descriptions of Structure 2.1. Details are not described herein again.

Structure B: A first structure formed by the at least two sheet-like structures is a quasi-grating (or referred to as grating teeth).

For Structure B, refer to descriptions of Structure 2.2. Details are not described herein again.

In a possible implementation, the scanning system may further include a punctured mechanical part. For details, refer to descriptions of Structure 3.

It should be noted that, in this application, the scanning system may be the scanning system shown in any one of FIG. 4, FIG. 5a to FIG. 5f, FIG. 6a to FIG. 6c, FIG. 7a and FIG. 7b, FIG. 8a and FIG. 8b, FIG. 9a to FIG. 9d, FIG. 10a and FIG. 10b, and FIG. 11a and FIG. 11b. The optical processing module in the scanning system may be any one or a combination of any more structures in Structure 1, Structure 2, or Structure 3. Alternatively, the scanning system may be the scanning system shown in FIG. 12. The optical processing module in the scanning system may be any structure of Structure 2, may be Structure 3, or may be a combination of any structure of Structure 2 and Structure 3.

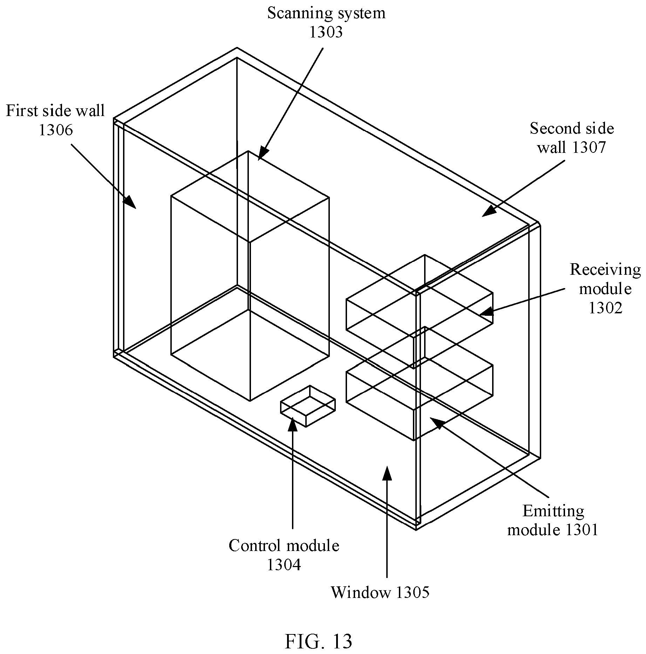

Based on the architecture and a function principle of the scanning system described in any one of the foregoing embodiments, this application may further provide a detection system. As shown in FIG. 13, the detection system may include an emitting module 1301, a receiving module 1302, and the scanning system 1303 in any one of the foregoing embodiments. The emitting module 1301 is configured to emit detection light, and the receiving module 1302 is configured to receive an echo signal reflected by a scanning module or a second sub-scanner. Further, the detection system may further include a control module 1304. Further, the detection system may further include a window 1305. Further, the detection system may further include a first side wall 1306 and a second side wall 1307. The first side wall 1306 and the second side wall 1307 are mainly configured to isolate impact of an external environment.

The following separately describes some functional modules shown in FIG. 13, to provide an example of a specific implementation solution. For ease of description, none of the emitting module, the receiving module, and the control module in the following is provided with an identifier.

### 2. Emitting module

In a possible implementation, the emitting module may include a light source component and an emitting optical system. The light source component is configured to emit detection light, and the emitting optical system is configured to propagate the detection light to a detection area. The detection light may be a linear beam or a surface beam.

For example, the light source component may be a light source array with M rows and N columns, where both M and N are positive integers. If both M and N are equal to 1, the light source component may be a single light source. If M is equal to 1 and N is an integer greater than 1, the light source component is a light source array with one row and M columns. If M is an integer greater than 1, and N is equal to 1, the light source component may be a light source array with M rows and one column. If both M and N are integers greater than 1, the light source component may be a light source array with M rows and N columns.

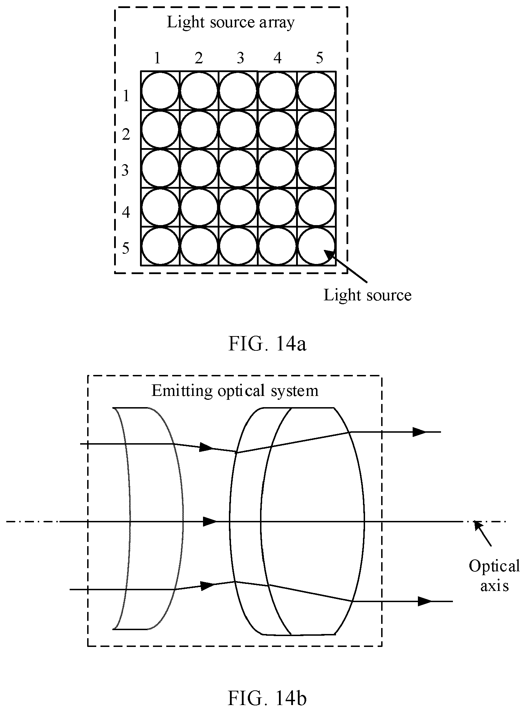

FIG. 14a is a schematic diagram of a structure of a light source component according to this application. For example, in the light source component, M=5, and N=5, that is, the light source component is a 5×5 light source array. It should be noted that a shape of the light source provided in FIG. 14a is merely an example. This is not limited in this application. For example, the shape of the light source may alternatively be a square, an ellipse, or another possible shape.

For example, a light source in the light source array may be, for example, a vertical cavity surface emitting laser (vertical cavity surface emitting laser, VCSEL), an edge emitting laser (edge emitting laser, EEL), a diode pumped solid state laser (diode pumped solid state laser, DPSS), or a fiber laser.

In a possible implementation, the light source in the light source array may implement independent addressing. The independent addressing means that the light source in the light source array may be independently gated (or lightened up, turned on, or powered on). The gated light source may be configured to emit detection light. An addressing manner of the light source array is related to a physical connection relationship of the light source. For example, the light source array may gate the light source in a time division manner by row or in a time division manner by column. Gating the light source in a time division manner by row means gating at least one row of light sources in the light source array at a same moment. Gating the light source in a time division manner by column means gating at least one column of light sources in the light source array at a same moment. In other words, a row of light sources gated by row may be one row of light sources or a plurality of rows of light sources, and a column of light sources gated by column may be one column of light sources or a plurality of columns of light sources. This is not limited in this application. For example, one row of light sources is gated at a same moment. A first row of light sources in the light source array is gated at a first moment, a second row of light sources in the light source array is gated at a second moment, and a third row of light sources in the light source array is gated at a third moment. The row of light sources gated at each moment emits detection light. For example, one column of light sources is gated at a same moment. A first column of light sources in the light source array is gated at the first moment, a second column of light sources in the light source array is gated at the second moment, and a third column of light sources in the light source array is gated at the third moment. The column of light sources gated at each moment emits detection light.

In a possible implementation, the emitting optical system may be further configured to shape and/or collimate and/or uniformize the detection light emitted by the light source component. FIG. 14b is a schematic diagram of a structure of an emitting optical system according to this application. The emitting optical system is configured to shape and/or collimate and/or uniformize a signal emitted by the light source component, and reflect shaped and/or collimated and/or uniformized detection light to the detection area by using the first sub-scanner. The emitting optical system may include at least one emitting mirror. The emitting mirror may be a spherical lens, or may be an aspheric lens. In other words, the emitting optical system may include a single spherical lens, or may include a combination of a plurality of spherical lenses, or may include a single aspheric lens, or may include a combination of a plurality of aspheric lenses. The combination of the plurality of spherical lenses and/or aspheric lenses helps improve imaging quality of the emitting optical system and reduce aberration of the emitting optical system. It should be understood that, in FIG. 14b, an example in which the emitting optical system includes three lenses is used.

It should be noted that a quantity of emitting mirrors included in the emitting optical system is not limited in this application, and may be more or less than that in FIG. 14b. In addition, a type of the emitting mirror is also not limited. The emitting mirror may be, for example, a flat convex lens, a flat concave lens, a concave convex lens, a double concave lens, or a double convex lens.

In a possible implementation, a material of the emitting mirror in the emitting optical system may be an optical material like glass, resin, or a crystal. The material of the emitting optical system is not limited in this application. To effectively suppress temperature drift, the emitting optical system generally includes at least one emitting mirror made of a glass material.

### 3. Receiving module

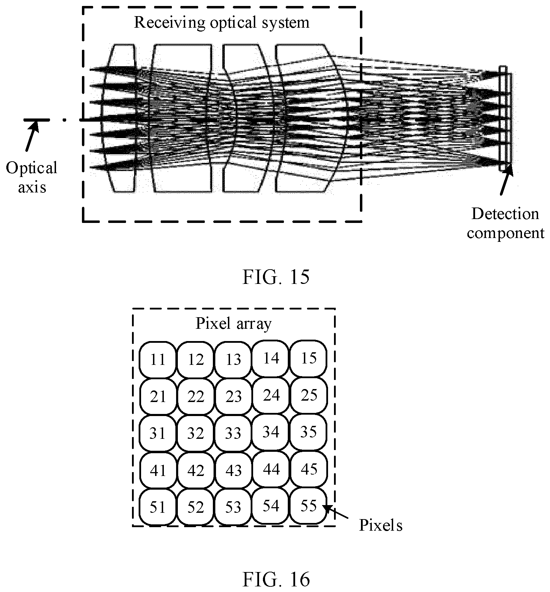

In a possible implementation, the receiving module may include a receiving optical system and a detection component. The receiving optical system is configured to: receive an echo signal reflected by the second sub-scanner, and converge the received echo signal to the detection component (refer to FIG. 15). The detection component is configured to perform optical-to-electrical conversion on the echo signal, to obtain an electrical signal used to determine association information of a target. The association information of the target includes but is not limited to distance information of the target, an orientation of the target, a speed of the target, and/or grayscale information of the target. For example, the receiving optical system may converge the echo signal from the second sub-scanner to a photosensitive surface of the detection component.

FIG. 15 is a schematic diagram of a structure of a receiving optical system according to this application. The receiving optical system may include at least one receiving mirror. The receiving mirror may be a spherical lens, or may be a plurality of aspheric lenses. In other words, the receiving optical system may include a single spherical lens, or may include a combination of a plurality of spherical lenses, or may include a single aspheric lens, or may include a combination of a plurality of aspheric lenses. The combination of the plurality of spherical lenses and/or aspheric lenses helps improve imaging quality of the receiving optical system and reduce aberration of the receiving optical system. It should be understood that, in FIG. 15, an example in which the receiving optical system includes four lenses is used.

It should be noted that a structure of the receiving optical system is not limited in this application, and the structure of the receiving optical system shown in FIG. 15 is merely an example. A quantity of receiving mirrors included in the receiving optical system is not limited in this application, and may be more or less than that in FIG. 15. In addition, a type of the receiving mirror is also not limited in this application. The receiving mirror may be a convex lens, a concave lens, or a combination of a convex lens and a concave lens. The convex lens is, for example, a double convex lens, a flat convex lens and a concave-convex lens. The concave lens is, for example, a double concave lens, a flat concave lens, and a concave-convex lens.

In a possible implementation, a material of the receiving mirror in the receiving optical system may be an optical material like glass, resin, or a crystal. The material of the receiving optical system is not limited in this application. To effectively suppress temperature drift, the receiving optical system generally includes at least one receiving mirror made of a glass material.

For example, the detection component may be, for example, a photon detector (photon detector, PD), a positive intrinsic negative (positive intrinsic negative, PIN) photodiode (also referred to as a PIN junction diode), or an avalanche photodiode (avalanche photodiode, APD), or may be a pixel array. Each pixel in the pixel array may include one or more single-photon avalanche diodes (single-photon avalanche diode, SPAD), a silicon photomultiplier (silicon photomultiplier, SiMP), a PIN photodiode, an APD, or the like.

In a possible implementation, the pixel array may include H rows and K columns, where both H and K are positive integers. If both H and K are equal to 1, the pixel component may be of a single pixel. If H is equal to 1 and K is an integer greater than 1, the pixel component is a pixel array with one row and H columns. If H is an integer greater than 1, and K is equal to 1, the pixel component may be a pixel array with H rows and one column. If both H and K are integers greater than 1, the pixel component may be a pixel array with H rows and K columns.

FIG. 16 is a schematic diagram of a structure of a pixel array according to this application. In FIG. 16, for example, H=5, and K=5, that is, an example in which the pixel array includes 5×5 pixels is used. If the light source array is gated by row, the pixel array may gate at least one row of the light source array; or if the light source array is gated by column, the pixel array may gate at least one column of the light source array.

It should be noted that a shape of the pixel provided above is merely an example. This is not limited in this application. For example, the shape of the pixel may alternatively be a square, an ellipse, or another possible shape.

### 4. Control module

In a possible implementation, the control module may receive an electrical signal from the detection component, and determine the association information of the target based on the electrical signal. Further, optionally, the control module may plan a driving path and the like based on the determined association information of the target, for example, evade an obstacle on a path on which a vehicle is to drive.

Further, optionally, the control module may be further configured to control the scanning module and rotation, and may be further configured to: control the scanning module to synchronize with the light source component, control the scanning module to synchronize with the pixel array, and the like.

In a possible implementation, the control module may include a controller. The controller may be, for example, a general-purpose controller, a field programmable gate array (field programmable gate array, FPGA), a digital signal processing (digital signal processing, DSP) circuit, an application-specific integrated circuit (application-specific integrated circuit, ASIC), or another programmable logic device.

For example, the controller may send a control signal to the pixel array, so that the pixel array gates at least one row or at least one column or other pixels that need to be gated. For another example, the controller may send a control signal to the light source array, so that the light source array gates a light source by row or column. Details are not listed one by one herein again.

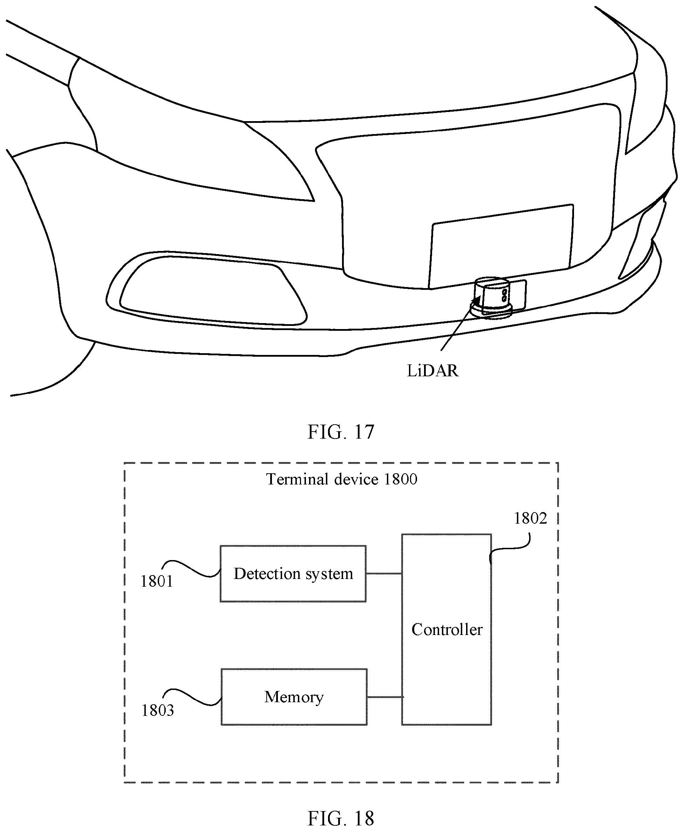

In a possible implementation, the detection system may be, for example, a LiDAR. The detection system may be installed on a vehicle. Refer to FIG. 17. In this example, a location of the LiDAR on the vehicle is merely an example, and the LiDAR may be alternatively disposed at any possible location around a body of the vehicle (refer to FIG. 1b). This is not limited in this application. Further, optionally, the detection system may alternatively send the association information of the determined target to the vehicle. The vehicle may plan a driving path based on the association information of the determined target, for example, evade an obstacle on a path on which the vehicle is to drive.

It should be noted that a shape of the LiDAR shown in FIG. 17 is merely an example, and the LiDAR may alternatively present another shape in appearance. For example, the shape of the LiDAR may alternatively be a cuboid or another regular or irregular shape. This is not limited in this application.

Based on the foregoing described architecture and function principle of the detection system, this application may further provide a terminal device. FIG. 18 is a schematic diagram of a structure of a terminal device according to this application. A terminal device 1800 may include the detection system 1801 in any one of the foregoing embodiments. Further, optionally, the terminal device may further include a controller 1802. The controller 1802 is configured to invoke a program or instructions to control the detection system 1801 to obtain detection information (for example, an electrical signal used to determine the association information of the target or the association information of the target). If the detection system obtains the electrical signal used to determine the association information of the target, the controller 1802 may further receive an electrical signal from the detection system 1801, and determine the association information of the target based on the electrical signal. Further, the controller 1802 may further plan a driving path for the terminal device based on the determined association information of the target, for example, evade an obstacle on the driving path. If the detection system obtains the association information of the target, the controller 1802 may be further configured to: receive the association information of the target from the detection system 1801, and perform further processing based on the association information of the target, for example, plan a driving path for the terminal device based on the association information of the target. Optionally, the terminal device may further include a memory 1803. The memory 1803 is configured to store a program or instructions. Certainly, the terminal device may further include another component, for example, a wireless control apparatus. Details are not listed one by one herein again.

For the detection system 1801, refer to descriptions of the foregoing detection system. Details are not described herein again.

The controller 1802 may include one or more processing units. For example, the controller 1802 may include an application processor (application processor, AP), a graphics processing unit (graphics processing unit, GPU), an image signal processor (image signal processor, ISP), a controller, a digital signal processor (digital signal processor, DSP), and the like. Different processing units may be independent components, or may be integrated into one or more processors.

The memory 1803 includes but is not limited to: a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium in any other form well-known in the art. For example, a storage medium is coupled to the controller, so that the controller can read information from the storage medium and can write information into the storage medium. Certainly, the storage medium may further be a component of the controller. The controller and the storage medium may be located in an ASIC.

For example, the terminal device may be, for example, a vehicle (for example, an unmanned vehicle, an intelligent vehicle, an electric vehicle, or a digital vehicle), a robot, a surveying and mapping device, an unmanned aerial vehicle, a smart home device (for example, a television, a vacuum cleaning robot, a smart desk lamp, a speaker system, an intelligent lighting system, an electrical control system, home background music, a home theater system, an intercom system, or video surveillance), a smart manufacturing device (for example, an industrial device), an intelligent transportation device (for example, an AGV, an unmanned transportation vehicle, or a truck), an intelligent terminal (a mobile phone, a computer, a tablet computer, a palmtop computer, a desktop computer, a headset, a speaker, a wearable device, a vehicle-mounted device, a virtual reality device, an augmented reality device, or the like), or the like.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "uniformity" does not mean absolute uniformity, and a specific engineering error may be allowed. "Verticality" does not mean absolute verticality. A specific engineering error may be allowed. "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural. In the text descriptions of this application, the character "/" generally indicates an "or" relationship between associated objects. In a formula in this application, the character "/" indicates a "division" relationship between the associated objects. In this application, a symbol "(a, b)" represents an open interval with a range greater than a and less than b, "[a, b]" represents a closed interval with a range greater than or equal to a and less than or equal to b, "(a, b]" represents a semi-open and half-closed interval with a range greater than a and less than or equal to b, and "(a, b]" represents a semi-open and half-closed interval with a range greater than a and less than or equal to b. In addition, in this application, the word "example" is used to represent giving an example, an illustration, or a description. Any embodiment or design scheme described as an "example" in this application should not be explained as being more preferred or having more advantages than another embodiment or design scheme. Alternatively, it may be understood as follows: The word "example" is used to present a concept in a specific manner, and does not constitute a limitation on this application.

It may be understood that various numbers in this application are merely used for differentiation for ease of description, and are not used to limit the scope of this application. The sequence numbers of the foregoing processes do not mean execution sequences, and the execution sequences of the processes should be determined based on functions and internal logic of the processes. The terms "first", "second", and another similar expression are intended to distinguish between similar objects, but do not necessarily indicate a specific order or sequence. In addition, the terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

Although this application is described with reference to specific features and embodiments thereof, it is clear that various modifications and combinations may be made to the specific features and the embodiments.

Correspondingly, the specification and accompanying drawings are merely examples for description of the solutions defined by the appended claims.

## Claims

1. A scanning system, comprising a scanning module (401) and an optical processing module (402), wherein the optical processing module (402) comprises a light isolation component (4021), the scanning module (401) comprises a scanner (4011), and the scanner (4011) is divided into a first sub-scanner and a second sub-scanner based on the light isolation component (4021), wherein
the first sub-scanner is configured to reflect, to a detection area, detection light from an emitting module;
the second sub-scanner is configured to reflect an echo signal to a receiving module, wherein the echo signal comprises reflected light obtained by reflecting the detection light by a target in the detection area; and
the light isolation component (4021) comprises a first flange (40211) and/or a second flange (40212), wherein the first flange (40211) faces a side of the first sub-scanner, and the second flange (40212) faces a side of the second sub-scanner; wherein the light isolation component (4021) further comprises a bottom plate, and the bottom plate is disposed between the first sub-scanner and the second sub-scanner; and
the bottom plate is surrounded by the first flange (40211) and/or the second flange (40212);
the scanning system being **characterized in that** the bottom plate is embedded into grooves in a middle area of the scanner (4011), so that the bottom plate is disposed between the first sub-scanner and the second sub-scanner.

2. The system according to claim 1, wherein a first surface of the first flange (40211) has an extinction function, and the first surface of the first flange (40211) is a surface that is of the first flange (40211) and that faces the first sub-scanner; and/or
a first surface of the bottom plate has an extinction function, and the first surface of the bottom plate is a surface that is of the bottom plate and that faces a side of the first flange (40211).

3. The system according to any one of claims 1 to 2, wherein the scanning module (401) further comprises a support, the support is configured to support the scanner (4011), and the light isolation component (4021) is disposed between the scanner (4011) and the support.

4. The system according to claim 3, wherein a first surface of the support has an extinction function, and/or a second surface of the second flange (40212) has an extinction function, and/or a second surface of the first flange (40211) has an extinction function; and
the first surface of the support is a surface that is of the support and that faces the second flange (40212), the second surface of the second flange (40212) is a surface that is of the second flange (40212) and that faces the support, and the second surface of the first flange (40211) is a surface that is of the first flange (40211) and that faces the support.

5. The system according to any one of claims 1 to 4, wherein the scanner (4011) comprises a polyhedron rotating mirror, a projection of the light isolation component (4021) on a first plane is a circumcircle of a projection of the scanner (4011) on the first plane, and the first plane is a plane perpendicular to a scanning axis of the scanner (4011).

6. The system according to any one of claims 1 to 5, wherein the scanner (4011) and the light isolation component (4021) share the scanning axis of the scanner (4011).

7. The system according to any one of claims 3 to 4,
wherein the scanning module (401) further comprises a motor, and the motor is fastened to the support; and
the motor is configured to drive the scanner (4011) to rotate around the scanning axis.

8. The system according to any one of claims 1 to 5, wherein a soft material is filled between the bottom plate of the light isolation component (4021) and the scanner (4011).

9. The system
according to any one of claims 1 to 8, wherein the scanning system further comprises a window; and
the optical processing module (402) further comprises at least two sheet-like structures, the at least two sheet-like structures form a first structure having at least one opening, a value of a first included angle between an opening direction of the first structure and the window is within [0°, 90°], and the first included angle is an included angle in a direction towards the scanner (4011).

10. The system according to claim 9, wherein at least one of the at least two sheet-like structures has an extinction function.

11. The system according to claim 9 or 10, wherein the scanning system further comprises a first side wall, and the first side wall is a side wall connected to the window; and
the first structure is disposed between the scanner (4011) and the first side wall, or the first structure is disposed on the first side wall.

12. The system according to any one of claims 9 to 11, wherein the first structure is a semi-open component, and an opening direction of the semi-open component faces the window.

13. The system according to claim 12, wherein a shape of the semi-open component comprises a π shape, a U shape, or a semi-closed rectangle.

14. The system according to claim 12 or 13, wherein an inner surface of the semi-open component has an extinction function.

## Patentansprüche

1. Abtastsystem, das ein Abtastmodul (401) und ein optisches Verarbeitungsmodul (402) umfasst, wobei das optische Verarbeitungsmodul (402) eine Lichtisolationskomponente (4021) umfasst, das Abtastmodul (401) einen Abtaster (4011) umfasst und der Abtaster (4011) basierend auf der Lichtisolationskomponente (4021) in einen ersten Teilabtaster und einen zweiten Teilabtaster unterteilt ist, wobei der erste Teilabtaster dazu ausgelegt ist, Detektionslicht von einem emittierenden Modul zu einem Detektionsbereich zu reflektieren;
der zweite Teilabtaster dazu ausgelegt ist, ein Echosignal zu einem empfangenden Modul zu reflektieren, wobei das Echosignal reflektiertes Licht umfasst, das durch Reflektieren des Detektionslichts durch ein Ziel im Detektionsbereich erhalten wird; und
die Lichtisolationskomponente (4021) einen ersten Flansch (40211) und/oder einen zweiten Flansch (40212) umfasst, wobei der erste Flansch (40211) einer Seite des ersten Teilabtasters zugewandt ist und der zweite Flansch (40212) einer Seite des zweiten Teilabtasters zugewandt ist; wobei die Lichtisolationskomponente (4021) ferner eine Bodenplatte umfasst und die Bodenplatte zwischen dem ersten Teilabtaster und dem zweiten Teilabtaster angeordnet ist; und
die Bodenplatte von dem ersten Flansch (40211) und/oder dem zweiten Flansch (40212) umgeben ist;
wobei das Abtastsystem **dadurch gekennzeichnet ist, dass**
die Bodenplatte in Nuten in einem mittleren Bereich des Abtasters (4011) eingebettet ist, so dass die Bodenplatte zwischen dem ersten Teilabtaster und dem zweiten Teilabtaster angeordnet ist.

2. System nach Anspruch 1, wobei eine erste Oberfläche des ersten Flansches (40211) eine Extinktionsfunktion aufweist und die erste Oberfläche des ersten Flansches (40211) eine Oberfläche ist, die zu dem ersten Flansch (40211) gehört und die dem ersten Teilabtaster zugewandt ist; und/oder
wobei eine erste Oberfläche der Bodenplatte eine Extinktionsfunktion aufweist und die erste Oberfläche der Bodenplatte eine Oberfläche ist, die zu der Bodenplatte gehört und die einer Seite des ersten Flansches (40211) zugewandt ist.

3. System nach einem der Ansprüche 1 bis 2, wobei das Abtastmodul (401) ferner einen Träger umfasst, wobei der Träger dazu ausgelegt ist, den Abtaster (4011) zu tragen, und die Lichtisolationskomponente (4021) zwischen dem Abtaster (4011) und dem Träger angeordnet ist.

4. System nach Anspruch 3, wobei eine erste Oberfläche des Trägers eine Extinktionsfunktion aufweist und/oder eine zweite Oberfläche des zweiten Flansches (40212) eine Extinktionsfunktion aufweist und/oder eine zweite Oberfläche des ersten Flansches (40211) eine Extinktionsfunktion aufweist; und
wobei die erste Oberfläche des Trägers eine Oberfläche ist, die zu dem Träger gehört und die dem zweiten Flansch (40212) zugewandt ist, wobei die zweite Oberfläche des zweiten Flansches (40212) eine Oberfläche ist, die zu dem zweiten Flansch (40212) gehört und die dem Träger zugewandt ist, und die zweite Oberfläche des ersten Flansches (40211) eine Oberfläche ist, die zu dem ersten Flansch (40211) gehört und die dem Träger zugewandt ist.

5. System nach einem der Ansprüche 1 bis 4, wobei der Abtaster (4011) einen Polyeder-Drehspiegel umfasst, wobei eine Projektion der Lichtisolationskomponente (4021) auf eine erste Ebene ein Umkreis einer Projektion des Abtasters (4011) auf die erste Ebene ist und die erste Ebene eine Ebene ist, die senkrecht zu einer Abtastachse des Abtasters (4011) steht.

6. System nach einem der Ansprüche 1 bis 5, wobei der Abtaster (4011) und die Lichtisolationskomponente (4021) die Abtastachse des Abtasters (4011) teilen.

7. System nach einem der Ansprüche 3 bis 4, wobei das Abtastmodul (401) ferner einen Motor umfasst und der Motor an dem Träger befestigt ist; und
wobei der Motor dazu ausgelegt ist, den Abtaster (4011) in eine Drehung um die Abtastachse anzutreiben.

8. System nach einem der Ansprüche 1 bis 5, wobei ein weiches Material zwischen die Bodenplatte der Lichtisolationskomponente (4021) und den Abtaster (4011) eingefüllt ist.

9. System nach einem der Ansprüche 1 bis 8, wobei das Abtastsystem ferner ein Fenster umfasst; und
wobei das optische Verarbeitungsmodul (402) ferner mindestens zwei blechartige Strukturen umfasst, wobei die mindestens zwei blechartigen Strukturen eine erste Struktur mit mindestens einer Öffnung bilden, wobei ein Wert eines ersten eingeschlossenen Winkels zwischen einer Öffnungsrichtung der ersten Struktur und dem Fenster innerhalb von [0°, 90°] liegt und der erste eingeschlossene Winkel ein eingeschlossener Winkel in einer Richtung zu dem Abtaster (4011) hin ist.

10. System nach Anspruch 9, wobei mindestens eine der mindestens zwei blechartigen Strukturen eine Extinktionsfunktion aufweist.

11. System nach Anspruch 9 oder 10, wobei das Abtastsystem ferner eine erste Seitenwand umfasst und die erste Seitenwand eine Seitenwand ist, die mit dem Fenster verbunden ist; und
wobei die erste Struktur zwischen dem Abtaster (4011) und der ersten Seitenwand angeordnet ist oder die erste Struktur auf der ersten Seitenwand angeordnet ist.

12. System nach einem der Ansprüche 9 bis 11, wobei die erste Struktur eine halboffene Komponente ist und eine Öffnungsrichtung der halboffenen Komponente dem Fenster zugewandt ist.

13. System nach Anspruch 12, wobei eine Form der halboffenen Komponente eine π-Form, eine U-Form oder ein halbgeschlossenes Rechteck umfasst.

14. System nach Anspruch 12 oder 13, wobei eine Innenfläche der halboffenen Komponente eine Extinktionsfunktion aufweist.

## Revendications

1. Système de balayage, comprenant un module de balayage (401) et un module de traitement optique (402), dans lequel le module de traitement optique (402) comprend un composant d'isolation de lumière (4021), le module de balayage (401) comprend un dispositif de balayage (4011), et le dispositif de balayage (4011) est divisé en un premier sous-dispositif de balayage et un second sous-dispositif de balayage sur la base du composant d'isolation de lumière (4021), dans lequel
le premier sous-dispositif de balayage est configuré pour réfléchir, vers une zone de détection, de la lumière de détection provenant d'un module d'émission ;
le second sous-dispositif de balayage est configuré pour réfléchir un signal d'écho vers un module de réception, dans lequel le signal d'écho comprend de la lumière réfléchie obtenue en réfléchissant la lumière de détection par le biais d'une cible dans la zone de détection ; et
le composant d'isolation de lumière (4021) comprend une première bride (40211) et/ou une seconde bride (40212), dans lequel la première bride (40211) fait face à un côté du premier sous-dispositif de balayage, et la seconde bride (40212) fait face à un côté du second sous-dispositif de balayage ; dans lequel le composant d'isolation de lumière (4021) comprend en outre une plaque inférieure, et la plaque inférieure est disposée entre le premier sous-dispositif de balayage et le second sous-dispositif de balayage ; et
la plaque inférieure est entourée par la première bride (40211) et/ou la seconde bride (40212) ;
le système de balayage étant **caractérisé en ce que**
la plaque inférieure est encastrée dans des rainures dans une zone médiane du dispositif de balayage (4011), de telle sorte que la plaque inférieure est disposée entre le premier sous-dispositif de balayage et le second sous-dispositif de balayage.

2. Système selon la revendication 1, dans lequel une première surface de la première bride (40211) a une fonction d'extinction, et la première surface de la première bride (40211) est une surface qui est de la première bride (40211) et qui fait face au premier sous-dispositif de balayage ; et/ou
une première surface de la plaque inférieure a une fonction d'extinction, et la première surface de la plaque inférieure est une surface qui est de la plaque inférieure et qui fait face à un côté de la première bride (40211).

3. Système selon l'une quelconque des revendications 1 et 2, dans lequel le module de balayage (401) comprend en outre un support, le support est configuré pour supporter le dispositif de balayage (4011), et le composant d'isolation de lumière (4021) est disposé entre le dispositif de balayage (4011) et le support.

4. Système selon la revendication 3, dans lequel une première surface du support a une fonction d'extinction, et/ou une seconde surface de la seconde bride (40212) a une fonction d'extinction, et/ou un seconde surface de la première bride (40211) a une fonction d'extinction ; et
la première surface du support est une surface qui est du support et qui fait face à la seconde bride (40212), la seconde surface de la seconde bride (40212) est une surface qui est de la seconde bride (40212) et qui fait face au support, et la seconde surface de la première bride (40211) est une surface qui est de la première bride (40211) et qui fait face au support.

5. Système selon l'une quelconque des revendications 1 à 4, dans lequel le dispositif de balayage (4011) comprend un miroir rotatif polyèdre, une projection du composant d'isolation de lumière (4021) sur un premier plan est un cercle circonscrit d'une projection du dispositif de balayage (4011) sur le premier plan, et le premier plan est un plan perpendiculaire à un axe de balayage du dispositif de balayage (4011).

6. Système selon l'une quelconque des revendications 1 à 5, dans lequel le dispositif de balayage (4011) et le composant d'isolation de lumière (4021) partagent l'axe de balayage du dispositif de balayage (4011).

7. Système selon l'une quelconque des revendications 3 et 4, dans lequel le module de balayage (401) comprend en outre un moteur, et le moteur est fixé au support ; et
le moteur est configuré pour entraîner le dispositif de balayage (4011) pour qu'il entre en rotation autour de l'axe de balayage.

8. Système selon l'une quelconque des revendications 1 à 5, dans lequel un matériau souple effectue le remplissage entre la plaque inférieure du composant d'isolation de lumière (4021) et le dispositif de balayage (4011).

9. Système selon l'une quelconque des revendications 1 à 8, dans lequel le système de balayage comprend en outre une fenêtre ; et
le module de traitement optique (402) comprend en outre au moins deux structures de type feuille, les au moins deux structures de type feuille forment une première structure ayant au moins une ouverture, une valeur d'un premier angle inclus entre une direction d'ouverture de la première structure et la fenêtre est dans les limites [0°, 90°], et le premier angle inclus est un angle inclus dans une direction vers le dispositif de balayage (4011).

10. Système selon la revendication 9, dans lequel au moins une des au moins deux structures de type feuille a une fonction d'extinction.

11. Système selon la revendication 9 ou 10, dans lequel le système de balayage comprend en outre une première paroi latérale, et la première paroi latérale est une paroi latérale reliée à la fenêtre ; et
la première structure est disposée entre le dispositif de balayage (4011) et la première paroi latérale, ou la première structure est disposée sur la première paroi latérale.

12. Système selon l'une quelconque des revendications 9 à 11, dans lequel la première structure est un composant semi-ouvert, et une direction d'ouverture du composant semi-ouvert fait face à la fenêtre.

13. Système selon la revendication 12, dans lequel une forme du composant semi-ouvert comprend une forme de π, une forme de U, ou un rectangle semi-fermé.

14. Système selon la revendication 12 ou 13, dans lequel une surface intérieure du composant semi-ouvert a une fonction d'extinction.
